# EUROPEAN PATENT SPECIFICATION

(11) **EP 2 747 488 B1**
(45) Date of publication and mention of the grant of the patent: **10.08.2016**
(21) Application number: 12840417.5
(22) Date of filing: 08.10.2012
(51) Int. Cl.: H04W 48/12

(54) **CELL CONTROL METHOD AND SYSTEM**
ZELLSTEUERUNGSVERFAHREN UND -SYSTEM
PROCÉDÉ ET SYSTÈME DE CONTRÔLE DE CELLULE

(30) Priority: 14.10.2011 CN 201110311461
(43) Date of publication of application: 25.06.2014
(73) Proprietor: Huawei Technologies Co., Ltd., Longgang District Shenzhen, Guangdong 518129 (CN)
(72) Inventor: CHEN, Jun, Shenzhen, Guangdong 518129 (CN)
(74) Representative: Thun, Clemens
(86) International application number: PCT/CN2012/082584
(87) International publication number: WO 2013/053306

(56) References cited:
- EP-A1- 2 586 246
- WO-A1-2012/006122
- CN-A- 101 772 134
- CN-A- 102 123 017
- US-A1- 2010 278 130
- NOKIA SIEMENS NETWORKS ET AL: "Signaling and configuration for the multi-point transmissions schemes", 3GPP DRAFT; R2-113167_MP_SIGNALING_V9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495347, [retrieved on 2011-05-03]
- HUAWEI ET AL: "Initial considerations on HSDPA multiflow data transmission", 3GPP DRAFT; R2-114899 INITIAL CONSIDERATIONS ON HSDPA MULTIFLOW DATA TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Zhuhai; 20111010, 4 October 2011 (2011-10-04), XP050540900, [retrieved on 2011-10-04]
- QUALCOMM INCORPORATED: "Impact to RAN protocol architecture and UTRAN implementation due to Multiflow HSDPA MP-TX schemes", 3GPP DRAFT; R2-112849_RLC_PDCP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 3 May 2011 (2011-05-03), XP050495251, [retrieved on 2011-05-03]

## Description

### TECHNICAL FIELD

The present invention relates to the communications field, and in particular, to a cell control method and system.

### BACKGROUND

For the purpose of further increasing the peak rate, the dual-cell high speed downlink packet access (Dual Cell High Speed Downlink Packages Access, DC-HSDPA) technology is introduced into Universal Mobile Telecommunications System (Universal Mobile Telecommunications System, UMTS) R8. In the latest evolved UMTS standard, the high speed downlink packet access multiflow transmission (High Speed Downlink Packages Access MultiFlow Tx, HSDPA-MF-Tx) technology is introduced. Multiple HSDPA serving cells exist in both DC-HSDPA and MF-Tx; multiple HSDPA serving cells in DC-HSDPA need to operate at adjacent frequencies and belonging to a same NodeB; and multiple HSDPA serving cells in MF-Tx are intra-frequency cells or inter-frequency cells, and these cells may operate in a same NodeB (base station) or neighboring NodeBs. From the perspectives of mobility and handover, for the purpose of better inheriting the existing mobility process, in both the DC-HSDPA and the MF-Tx, a primary cell and a secondary cell need to be defined among the multiple HSDPA serving cells.

In the current DC-HSDPA technology, the objective for saving power of a user equipment (User Equipment, UE) can be achieved by controlling activation or deactivation of the secondary cell, where a NodeB acts as a determining entity and may initiate an activation operation and a deactivation operation on the secondary cell. For example, when detecting that a small amount of UE downlink data needs to be scheduled, the NodeB may instruct, over an air interface, the UE to stop receiving, in the secondary cell, data on an HSDPA channel, that is, controlling deactivation of the secondary cell; and after the secondary cell is deactivated, if the NodeB detects that a large amount of UE downlink data needs to be scheduled, the NodeB may similarly instruct, over the air interface, the UE to receive, in the secondary cell, data on the HSDPA channel again, that is, controlling activation of the secondary cell. In the current MF-Tx technology, if serving cells of the UE belong to a same NodeB, to achieve the objective of saving power for the UE, reference may be made to the activation and deactivation control mechanism in the current DC-HSDPA technology.

For example, EP 2 586 246 A0 and WO 2012/006122 A1 provide for mobility in a Multi - Point HSDPA network capable of downlink aggregation. Some aspects of the disclosure provide modified mobility events utilized for altering (adding/removing secondary cells at/from) the Active Set for a UE. Here, the addition of a cell to the Active Set can coincide with making that cell a secondary serving cell when an event 1A happens. Further, the deletion of a secondary serving cell from the Active Set can coincide with switching off the Multi - Point HSDPA mode when an event IB happens. Still further, a modified mobility event for an HSDPA serving cell change can be utilized to swap a primary serving cell and a secondary serving cell.
Further, XP 050495347 36PP R2-113167 refers to signaling and configuration for multi-point transmission schemes. Further, XP 050540900 36PP R2-114899 refers to initial considerations on HSDPA multiflow data transmission.
In addition, US 2010/0278130 A1 refers to a method and apparatus for activating or de-activating a secondary carrier, comprising informing a serving radio network controller when a secondary carrier was activated or de-activated, receiving a confirmation from the serving radio network controller that non-serving NodeB cells have achieved synchronization, and scheduling a UE upon receiving confirmation. In another example, there is disclosed a method and apparatus for de-activating a secondary carrier, comprising controlling de-activation of the secondary carrier using high-speed shared control channel orders, receiving acknowledgement of said high-speed shared control channel orders, and informing a serving radio network controller when the secondary carrier was de-activated.

Further, XP 050495251 36PP R2-112849 refers to a RAN protocol architecture and UTRAN implementation due to multiflow HSDPA MP-TX schemes.

In the current MF-Tx technology, a problem that a network-side HS-DPCCH and a UE-side HS-DPCCH are inconsistent in an deactivation process and a problem of invalid data transmission over an Iub interface after deactivation of the secondary cell exist, and this may affect performance of network-side scheduling; in addition, for the activation control or if a deactivation instruction is sent in the primary cell, these problems still exist.

### SUMMARY

In multiple aspects of the present invention, a cell control method and system are provided, so as to effectively improve performance of network-side scheduling in an MF-Tx technical scenario and save power for a UE.

An aspect of the present invention provides a cell control method. The method includes: sending, by a radio network controller (RNC), indication information for deactivating a secondary cell to a second NodeB in which the secondary cell resides, so that the second NodeB stops, according to the indication information for deactivating the secondary cell, sending data on a downlink channel of the secondary cell; sending, by the RNC, to a first NodeB in which a primary cell resides, indication information for falling back a detection format, so that the first NodeB falls back, according to the indication information for falling back a detection format, to channel coding format detection of a single-cell uplink high-speed dedicated physical control channel (HS-DPCCH), wherein the primary and secondary cell are provided in the context of High Speed Downlink Packages Access, HSDPA, multi-flow transmission for a same user equipment UE; and sending, by the second NodeB or the first NodeB, indication information for stopping channel detection of the secondary cell to the user equipment (UE), so that the UE stops, according to the indication information for stopping channel detection of the secondary cell, channel detection of the secondary cell, further comprising:
notifying, by the RNC, the first NodeB of a time at which fallback of a detection format takes effect; and
notifying, by the second NodeB, the UE of a time at which stopping channel detection of the secondary cell takes effect, wherein:
   the time, of which the first NodeB is notified by the RNC, at which fallback of a detection format takes effect is the same as the time, of which the UE is notified by the second NodeB, at which stopping channel detection of the secondary cell takes effect.

Correspondingly, another aspect of the present invention further provides a cell control system. The system includes: a radio network controller (RNC), a second NodeB in which a secondary cell resides, a first NodeB in which a primary cell resides, and a user equipment (UE), wherein the primary and secondary cell are provided in the context of High Speed Downlink Packages Access, HSDPA, multi-flow transmission for the same user equipment UE.

The RNC is configured to send indication information for deactivating the secondary cell to the second NodeB, so that the second NodeB stops, according to the indication information for deactivating the secondary cell, sending data on a downlink channel of the secondary cell; and send, to the first NodeB, indication information for falling back a detection format, so that the first NodeB falls back, according to the indication information for falling back a detection format, to channel coding format detection of a single-cell uplink high-speed dedicated physical control channel (HS-DPCCH).

The second NodeB is configured to receive the indication information for deactivating the secondary cell, where the indication information for deactivating the secondary cell is sent by the RNC; stop, according to the indication information for deactivating the secondary cell, sending data on the downlink channel of the secondary cell; and send indication information for stopping channel detection of the secondary cell to the UE, so that the UE stops, according to the indication information for stopping channel detection of the secondary cell, channel detection of the secondary cell.

The first NodeB is configured to receive the indication information for falling back a detection format, where the indication information for falling back a detection format is sent by the RNC; fall back, according to the indication information for falling back a detection format, to the channel coding format detection of the single-cell HS-DPCCH; and send indication information for stopping channel detection of the secondary cell to the UE, so that the UE stops, according to the indication information for stopping channel detection of the secondary cell, channel detection of the secondary cell.

The UE is configured to receive the indication information for stopping channel detection of the secondary cell, where the indication information for stopping channel detection of the secondary cell is sent by the first NodeB or the second NodeB; and stop, according to the indication information for stopping channel detection of the secondary cell, channel detection of the secondary cell, wherein the RNC is further configured to notify the first NodeB of a time at which fallback of a detection format takes effect;
the second NodeB is further configured to notify the UE of a time at which stopping channel detection of the secondary cell takes effect; and
the time, of which the first NodeB is notified by the RNC, at which fallback of a detection format takes effect is the same as the time, of which the UE is notified by the second NodeB (302), at which stopping channel detection of the secondary cell takes effect.

Another aspect according to an example not forming part of the invention further provides a cell control method. The method includes: sending, by a first NodeB in which a primary cell resides, indication information for deactivating a secondary cell to a radio network controller (RNC), so that the RNC sends the indication information for deactivating the secondary cell to a second NodeB in which the secondary cell resides; sending, by the first NodeB or the second NodeB, indication information for stopping detection of the secondary cell to a user equipment (UE), so that the UE stops, according to the indication information for stopping channel detection of the secondary cell, channel detection of the secondary cell; and falling back, by the first NodeB, to channel coding format detection of a single-cell uplink high-speed dedicated physical control channel (HS-DPCCH), where after stopping, according to the indication information for deactivating the secondary cell, sending data of the secondary cell, the second NodeB sends the indication information for stopping detection of the secondary cell to the UE.

Correspondingly, another aspect according to an example not forming part of the invention further provides a cell control system. The system includes: a radio network controller (RNC), a first NodeB in which a primary cell resides, a second NodeB in which a secondary cell resides, and a user equipment (UE).

The first NodeB is configured to send indication information for deactivating the secondary cell to the RNC, so that the RNC sends the indication information for deactivating the secondary cell to the second NodeB; send indication information for stopping detection of the secondary cell to the UE, and the UE stops, according to the indication information for stopping detection of the secondary cell, channel detection of the secondary cell; and fall back to channel coding format detection of a single-cell uplink high-speed dedicated physical control channel (HS-DPCCH).

The RNC is configured to receive the indication information for deactivating the secondary cell, where the indication information for deactivating the secondary cell is sent by the first NodeB; and send the indication information for deactivating the secondary cell to the second NodeB.

The second NodeB is configured to receive the indication information for deactivating the secondary cell, where the indication information for deactivating the secondary cell is sent by the RNC; stop, according to the indication information for deactivating the secondary cell, sending data of the secondary cell; and send indication information for stopping detection of the secondary cell to the UE.

The UE is configured to receive the indication information for stopping detection of the secondary cell, where the indication information for stopping detection of the secondary cell is sent by the first NodeB or the second NodeB; and stop, according to the indication information for stopping detection of the secondary cell, channel detection of the secondary cell.

Still another aspect according to an example not forming part of the invention further provides a cell control method. The method includes: sending, by a second NodeB in which a secondary cell resides, indication information for stopping channel detection of the secondary cell to a user equipment (UE), so that the UE stops, according to the indication information for stopping detection of the secondary cell, channel detection of the secondary cell, and triggers reporting of a state report at a radio link layer, where the state report carries indication information for deactivating the secondary cell, and the indication information for deactivating the secondary cell is reported to a radio network controller (RNC); sending, by the RNC to a first NodeB in which a primary cell resides and according to the indication information for deactivating the secondary cell, indication information for falling back a detection format, where the indication information for deactivating the secondary cell is carried in the state report or sent by the second NodeB; or sending, by the UE on an uplink channel to the first NodeB, indication information for falling back a detection format; and falling back, by the first NodeB according to the indication information for falling back a detection format, to channel coding format detection of a single-cell uplink high-speed dedicated physical control channel (HS-DPCCH), where the indication information for falling back a detection format is sent by the RNC or is sent by the UE on the uplink channel.

Correspondingly, another aspect according to an example not forming part of the invention further provides a cell control system. The system includes: a radio network controller (RNC), a first NodeB in which a primary cell resides, a second NodeB in which a secondary cell resides, and a user equipment (UE).

The second NodeB is configured to send indication information for stopping channel detection of the secondary cell to the UE, so that the UE stops, according to the indication information for stopping channel detection of the secondary cell, channel detection of the secondary cell, triggers reporting of a state report at a radio link layer, and sends, on an uplink channel to the first NodeB in which the primary cell resides, indication information for falling back a detection format, where the state report carries indication information for deactivating the secondary cell, and the indication information for deactivating the secondary cell is reported to the RNC.

The RNC is configured to send, to the first NodeB in which the primary cell resides and according to the indication information for deactivating the secondary cell, indication information for falling back a detection format, where the indication information for deactivating the secondary cell is carried in the state report or sent by the second NodeB.

The first NodeB is configured to fall back, according to the indication information for falling back a detection format, to channel coding format detection of a single-cell uplink high-speed dedicated physical control channel (HS-DPCCH), where the indication information for detection format fallback is sent by the RNC or is sent by the UE on the uplink channel.

The UE is configured to stop, according to the indication information for stopping detection of the secondary cell, channel detection of the secondary cell, where the indication information for stopping channel detection of the secondary cell is sent by the second NodeB; trigger reporting of the state report at the radio link layer; and send, on the uplink channel to the first NodeB in which the primary cell resides, the indication information for falling back a detection format.

Another aspect according to an example not forming part of the invention provides a cell control method. The method includes: sending, by a radio network controller (RNC), indication information for deactivating a secondary cell to a second NodeB in which the secondary cell resides, so that the second NodeB stops, according to the indication information for deactivating the secondary cell, sending data on a downlink channel of the secondary cell; sending, by the RNC to a first NodeB in which a primary cell resides, indication information for switching a detection format, so that the first NodeB switches, according to the indication information for switching a detection format, to channel coding format detection of a dual-cell uplink high-speed dedicated physical control channel (HS-DPCCH); and sending, by the second NodeB or the first NodeB, indication information for stopping channel detection of the secondary cell to a user equipment (UE), so that the UE stops, according to the indication information for stopping channel detection of the secondary cell, channel detection of the secondary cell.

Correspondingly, another aspect according to an example not forming part of the invention further provides a cell control system. The system includes: a radio network controller (RNC), a first NodeB in which a primary cell resides, a second NodeB in which a secondary cell resides, and a user equipment (UE).

The RNC is configured to send indication information for activating the secondary cell to the second NodeB, so that the second NodeB sends data on a downlink channel of the secondary cell according to the indication information for activating the secondary cell; and send indication information for switching a detection format to the first NodeB, so that the first NodeB switches, according to the indication information for switching a detection format, to channel coding format detection of a dual-cell uplink high-speed dedicated physical control channel HS-DPCCH.
The second NodeB is configured to receive the indication information for activating the secondary cell, where the indication information for activating the secondary cell is sent by the RNC; send data on the downlink channel of the secondary cell according to the indication information for activating the secondary cell; and send indication information for channel detection of the secondary cell to the UE, so that the UE detects a channel of the secondary cell according to the indication information for channel detection of the secondary cell.

The first NodeB is configured to receive the indication information for switching a detection format, where the indication information for switching a detection format is sent by the RNC; switch, according to the indication information for switching a detection format, to the channel coding format detection of the dual-cell HS-DPCCH; and send the indication information for channel detection of the secondary cell to the UE, so that the UE detects a channel in the secondary cell according to the indication information for channel detection of the secondary cell.

The UE is configured to receive the indication information for channel detection of the secondary cell, where the indication information for channel detection of the secondary cell is sent by the first NodeB or the second NodeB; and detect a channel in the secondary cell according to the indication information for channel detection of the secondary cell.

Another aspect according to an example not forming part of the invention further provides a cell control method. The method includes: sending, by a first NodeB in which a primary cell resides, indication information for deactivating a secondary cell to a radio network controller (RNC), so that the RNC sends the indication information for deactivating the secondary cell to a second NodeB in which the secondary cell resides; sending, by the first NodeB or the second NodeB, indication information for channel detection of the secondary cell to a user equipment (UE), so that the UE detects a channel in the secondary cell according to the indication information for channel detection of the secondary cell; and switching, by the first NodeB, to channel coding format detection of a dual-cell uplink high-speed dedicated physical control channel (HS-DPCCH), where after sending data of the secondary cell according to the received indication information for deactivating the secondary cell, the second NodeB sends the indication information for detection of the secondary cell to the UE.

Correspondingly, another aspect according to an example not forming part of the invention further provides a cell control system. The system includes: a radio network controller (RNC), a first NodeB in which a primary cell resides, a second NodeB in which a secondary cell resides, and a user equipment (UE).

The first NodeB is configured to send indication information for activating the secondary cell to the RNC, so that the RNC sends the indication information for activating the secondary cell to the second NodeB in which the secondary cell resides; send indication information for detection of the secondary cell to the UE, so that the UE detects a channel in the secondary cell according to the indication information for detection of the secondary cell; and switch to channel coding format detection of a dual-cell uplink high-speed dedicated physical control channel HS-DPCCH.

The RNC is configured to, after receiving the indication information for activating the secondary cell, send the indication information for activating the secondary cell to the second NodeB, where the indication information for activating the secondary cell is sent by the first NodeB.

The second NodeB is configured to send data of the secondary cell after receiving the indication information for activating the secondary cell, where the indication information for activating the secondary cell is sent by the RNC; and send indication information for detection of the secondary cell to the UE.

The UE is configured to receive the indication information for detection of the secondary cell, where the indication information for detection of the secondary cell is sent by the first NodeB or the second NodeB; and detect a channel in the secondary cell according to the indication information for detection of the secondary cell.

Another aspect according to an example not forming part of the invention further provides a cell control method. The method includes: sending, by a second NodeB in which a secondary cell resides, indication information for channel detection of the secondary cell to a user equipment (UE), so that the UE detects a channel in the secondary cell according to the indication information for detection of the secondary cell, and triggers reporting of a state report at a radio link layer, where the state report carries indication information for deactivating the secondary cell, and the indication information for deactivating the secondary cell is reported to a radio network controller (RNC); sending, by the RNC to a first NodeB in which a primary cell resides and according to indication information for activating the secondary cell, indication information for switching a detection format, where the indication information for activating the secondary cell is carried in the state report or sent by the second NodeB; or sending, by the UE on an uplink channel to the first NodeB, indication information for switching a detection format; and switching, by the first NodeB according to the indication information for switching a detection format, to channel coding format detection of a dual-cell uplink high-speed dedicated physical control channel (HS-DPCCH), where the indication information for switching a detection format is sent by the RNC or is sent by the UE on the uplink channel.

Correspondingly, a cell control system according to an example not forming part of the invention is further provided. The system includes: a radio network controller (RNC), a first NodeB in which a primary cell resides, a second NodeB in which a secondary cell resides, and a user equipment (UE).

The second NodeB is configured to send indication information for channel detection of the secondary cell to the UE, so that the UE detects a channel in the secondary cell according to the indication information for detection of the secondary cell, triggers reporting of a state report at a radio link layer, and sends, on an uplink channel, indication information for switching a detection format to the first NodeB in which the primary cell resides, where the state report carries indication information for activating the secondary cell, and the indication information for activating the secondary cell is reported to the radio network controller RNC.

The RNC is configured to send, to the first NodeB in which the primary cell resides and according to the indication information for activating the secondary cell, indication information for switching a detection format, where the indication information for activating the secondary cell is carried in the state report or sent by the second NodeB.

The first NodeB is configured to switch, according to the indication information for switching a detection format, to channel coding format detection of a dual-cell uplink high-speed dedicated physical control channel (HS-DPCCH), where the indication information for switching a detection format is sent by the RNC or is sent by the UE on the uplink channel.

The UE is configured to receive the indication information for channel detection of the secondary cell, where the indication information for channel detection of the secondary cell is sent by the second NodeB; detect a channel in the secondary cell according to the indication information for detection of the secondary cell; trigger reporting of the state report at the radio link layer; and send, on the uplink channel, the indication information for switching a detection format to the first NodeB in which the primary cell resides.

According to the foregoing technical solutions, a problem that a network-side HS-DPCCH and a UE-side HS-DPCCH are inconsistent in a deactivation process and a problem of invalid data transmission over an Iub interface after deactivation of the secondary cell can be effectively solved; therefore, network-side scheduling performance is effectively improved, and power of the UE is saved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is schematic architectural diagram of a downlink multipoint transmission system according to an embodiment of the present invention;
FIG. 2 is a flowchart of a cell control method according to another embodiment of the present invention;
FIG. 3 is a schematic structural diagram of a cell control system according to another embodiment of the present invention;
FIG. 4 is a flowchart of a cell control method according to an example not forming part of the invention;
FIG. 5 is a schematic structural diagram of a cell control system according to an example not forming part of the invention;
FIG. 6 is a flowchart of a cell control method according to an example not forming part of the invention;
FIG. 7 is a schematic structural diagram of a cell control system according to an example not forming part of the invention;
FIG. 8 is a flowchart of a cell control method according to an example not forming part of the invention;
FIG. 9 is a schematic structural diagram of a cell control system according to an example not forming part of the invention;
FIG. 10 is a flowchart of a cell control method according to an example not forming part of the invention;
FIG. 11 is a schematic structural diagram of a cell control system according to an example not forming part of the invention;
FIG. 12 is a flowchart of a cell control method according to an example not forming part of the invention; and
FIG. 13 is a schematic structural diagram of a cell control system according to an example not forming part of the invention.

### DESCRIPTION OF EMBODIMENTS

To make the objectives, technical solutions, and advantages of the present invention more clearly, the following further describes the embodiments of the present invention in detail with reference to the accompanying drawings.

Various technologies described in the specification may be used in various radio communications systems, for example, current 2G and 3G communications systems and next-generation systems, including a global system for mobile communications system (Global System for Mobile communications, GSM), a code sivision multiple access (Code Division Multiple Access, CDMA) system, a time division multiple access (Time Division Multiple Access, TDMA) system, a wideband code division multiple access (Wideband Code Division Multiple Access Wireless, WCDMA) system, a frequency division multiple access (Frequency Division Multiple Addressing, FDMA) system, an orthogonal frequency-division multiple access (Orthogonal Frequency-Division Multiple Access, OFDMA) system, a single-carrier FDMA (SC-FDMA) system, a general packet radio service (General Packet Radio Service, GPRS) system, a long term evolution (Long Term Evolution, LTE) system, and the like.

The specification describes various aspects in combination with a terminal, a base station, and/or a base station controller.

In addition, the terms "system" and "network" in this specification may be used interchangeably in this specification. The term "and/or" in the specification describes only an association relationship for describing associated objects and represents that three relationships may exist. For example, A and/or B may represent the following three cases: Only A exists, both A and B exist, and only B exists. In addition, the character "/" in the specification generally indicates an "or" relationship between the associated objects.

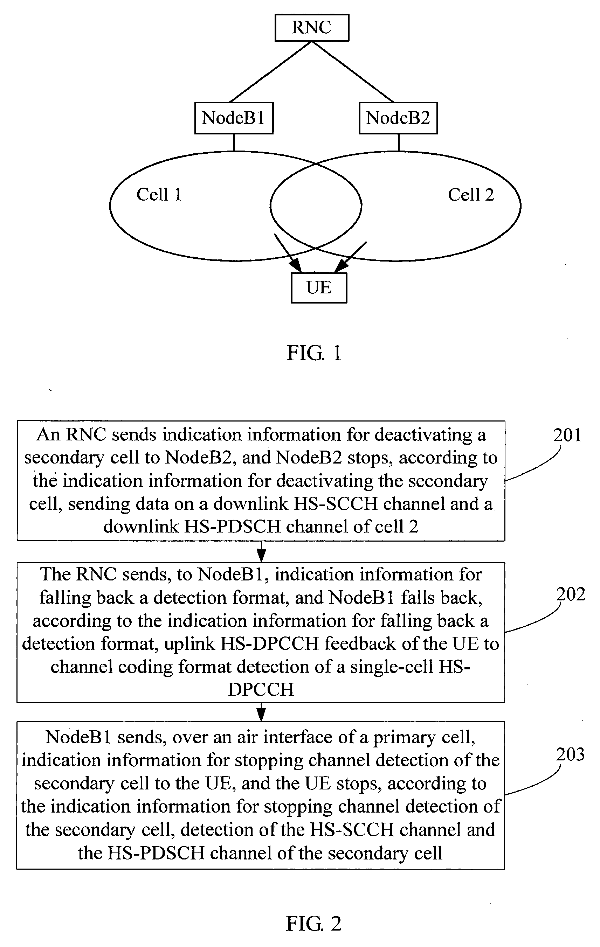

In an architecture of a downlink multipoint transmission system shown in FIG. 1, a UE is working in MF-Tx state, and a primary cell and a secondary cell are cell 1 and cell 2, respectively. The primary cell may be defined as a cell that bears all physical channels or defined as consistent with a serving cell in non-MF-Tx state; and the primary cell is defined as a cell that is in MF-Tx state and is except the primary cell. Cell 1 is in a first NodeB NodeB1, and cell 2 is in a second NodeB NodeB2. It may be considered that cell 1 or cell 2 is a control unit on a NodeB, and therefore, all instructions delivered from cell 1 or cell 2 are equivalent to those delivered from NodeB1 or NodeB2. With respect to the architecture of the downlink multipoint transmission system shown in FIG. 1, this embodiment provides a cell control method.

For ease of description, the method provided in this embodiment is described in detail by using an example that deactivation of a secondary cell is controlled by an RNC in FIG. 1. This embodiment does not set a limitation to a trigger condition under which deactivation of the secondary cell is controlled by the RNC. In practical applications, the RNC may deactivate the secondary cell according to factors, such as amount of traffic to be scheduled, and load of the secondary cell. For example, when there is a relatively small amount of traffic to be scheduled, data may be scheduled completely in the primary cell, without a need to occupy an extra scheduling resource of the secondary cell; in this case, the RNC may determine that the secondary cell is deactivated. Referring to FIG. 2, details about a procedure of the method provided in this embodiment are as follows:
201: The RNC sends indication information for deactivating the secondary cell to NodeB2, and NodeB2. stops, according to the indication information for deactivating the secondary cell, sending data on a downlink high-speed shared control channel (High Speed Shared Control Channel, HS-SCCH) of cell 2 and a high-speed physical data shared channel (High Speed Physical Data Share Channel, HS-PDSCH) of cell 2.

For this step, the indication information for deactivating the secondary cell, which is sent by the RNC, may be sent in a manner of being carried in signaling or a data frame between the RNC and NodeB2, or sent in another manner. This embodiment does not set a specific limitation to this. An example of the signaling manner is a radio link reconfiguration request or a radio link reconfiguration response, and an example of the data frame manner is a dedicated-channel frame format or a downlink-shared-channel frame format. In a user plane, the RNC may have sent data on NodeB2; therefore, after the RNC controls deactivation of the secondary cell, the RNC needs to transfer data that has not been successfully sent in the secondary cell, to the primary cell for continued sending; in addition, NodeB2 needs to discard temporarily stored data and reconfigure a MAC-hs entity or a MAC-ehs entity.

202: The RNC sends, to NodeB1, indication information for falling back a detection format, and NodeB1 falls back, according to the indication information for falling back a detection format, uplink HS-DPCCH feedback of the UE to channel coding format detection of a single-cell HS-DPCCH.

The indication information for falling back a detection format, which is sent by the RNC, may be sent in a manner of being carried in signaling or a data frame between the RNC and NodeB1, or in another manner. This embodiment does not set a specific limitation to this. An example of the signaling manner is a radio link reconfiguration request or a radio link reconfiguration response, and an example of the data frame manner is a dedicated-channel frame format or a downlink-shared-channel frame format. The fallback to the channel coding format detection of the single-cell HS-DPCCH may be, for example, that the NodeB1 previously performs detection according to a coding format in a dual-cell configuration, and after the secondary cell is deactivated, performs detection according to a coding format in a single-cell configuration.

In addition, it should be noted that in addition to being performed after the step 201, the step 202 may also be performed before the step 201. This embodiment does not set a limitation to an order for performing the step 201 and the step 202.

203: NodeB1 sends, over an air interface of the primary cell, indication information for stopping channel detection of the secondary cell to the UE, and the UE stops, according to the indication information for stopping channel detection of the secondary cell, detection of the HS-SCCH channel and the HS-PDSCH channel of the secondary cell.

For this step, the indication information for stopping channel detection of the secondary cell may be sent in a manner of being carried on the HS-SCCH channel or one or more other downlink physical channels, or in another manner. This embodiment does not set a specific limitation to this. Stopping, by the UE according to the indication information for stopping channel detection of the secondary cell, the detection of the HS-SCCH channel and the HS-PDSCH channel of the secondary cell means that: The UE falls back to a single-cell HSDPA receiving mode; in addition, the HS-DPCCH channel also falls back to a single-cell HS-DPCCH feedback format.

Alternatively, in addition to this step of sending, by NodeB1 over the air interface of the primary cell, the indication information for stopping channel detection of the secondary cell to the UE, NodeB2 may also send, over an air interface of the secondary cell, the indication information for stopping channel detection of the secondary cell to the UE, so that the UE stops, according to the indication information for stopping channel detection of the secondary cell, detection of the HS-SCCH channel and the HS-PDSCH channel of the secondary cell. However, in this case, HS-DPCCH fallback may take effect at different time points for NodeB1 and the UE. Therefore, preferably, for the purpose of keeping NodeB1 and the UE synchronous during the HS-DPCCH fallback, the method provided in this embodiment supports that in the step 202, when the RNC sends the indication information for falling back a detection format, the RNC may also notify NodeB1 of a time at which fallback of a detection format takes effect; in addition, when NodeB2 sends, over the air interface of the secondary cell, the indication information for stopping channel detection of the secondary cell to the UE, NodeB2 may also notify the UE of a time at which stopping channel detection of the secondary cell takes effect; the time, of which the NodeB1 is notified by the RNC, at which fallback of a detection format takes effect is the same as the time, of which the UE is notified by NodeB2, at which stopping channel detection of the secondary cell takes effect, so that NodeB1 and the UE perform the fallback at the same time, and this ensures consistency between the time on a network side and the time on a UE side; and the effective time may be sent in a manner of being carried in signaling or a data frame between the RNC and NodeB1, an example of the signaling manner is a radio link reconfiguration request or a radio link reconfiguration response, and an example of the data frame manner is a dedicated-channel frame format or a downlink-shared-channel frame format. In addition, a time may be preset, so that NodeB1 and the UE perform synchronous HS-DPCCH fallback at the preset time.

According to the method provided in this embodiment, for an MF-Tx technical scenario in which serving cells of a UE are on different NodeBs, a control procedure for deactivating a secondary cell is triggered by an RNC; after the secondary cell is deactivated, the RNC transfers data that has not been successfully sent in the secondary cell, to a primary cell for continued sending; in addition, NodeB2 discards temporarily stored data and reconfigures a MAC-hs entity or a MAC-ehs entity, the UE falls back to a single-cell HS-DPCCH feedback, and NodeB1 falls back to channel coding format detection of a single-cell HS-DPCCH. This effectively solves a problem that a network-side HS-DPCCH and a UE-side HS-DPCCH are inconsistent in a deactivation process and a problem of invalid data transmission over an Iub interface after deactivation of the secondary cell; as a result, network-side scheduling performance is effectively improved, and power of the UE is saved.

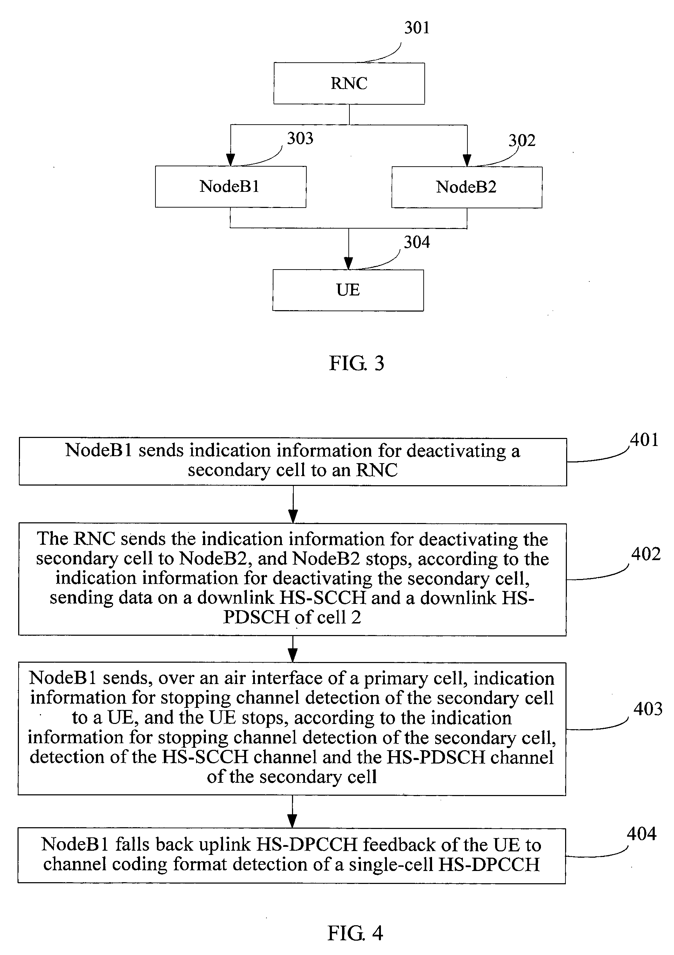

Another embodiment of the present invention provides a cell control system. The system is configured to execute the cell control method provided in the foregoing embodiment and belongs to the same idea as the cell control method provided in the foregoing embodiment. For a detailed implementation process thereof, refer to the foregoing embodiment. Referring to FIG. 3, the system includes an RNC 301, a NodeB2 302, a NodeB1 303, and a UE 304.

The RNC 301 is configured to send indication information for deactivating a secondary cell to the NodeB2 302, so that the NodeB2 302 stops, according to the indication information for deactivating the secondary cell, sending data on a downlink channel of the secondary cell; and send, to the NodeB1 303, indication information for falling back a detection format, so that the NodeB1 303 falls back, according to the indication information for falling back a detection format, to channel coding format detection of a single-cell HS-DPCCH.

The NodeB2 302 is configured to receive the indication information for deactivating the secondary cell, where the indication information for deactivating the secondary cell is sent by the RNC 301; stop, according to the indication information for deactivating the secondary cell, sending data on a downlink channel of the secondary cell; and send indication information for stopping channel detection of the secondary cell to the UE 304, so that the UE 304 stops, according to the indication information for stopping channel detection of the secondary cell, channel detection of the secondary cell.

The NodeB1 303 is configured to receive the indication information for falling back a detection format, where the indication information for falling back a detection format is sent by the RNC 301; fall back, according to the indication information for falling back a detection format, to the channel coding format detection of the single-cell HS-DPCCH; and send indication information for stopping channel detection of the secondary cell to the UE 304, so that the UE 304 stops, according to the indication information for stopping channel detection of the secondary cell, channel detection of the secondary cell.

The UE 304 is configured to receive the indication information for stopping channel detection of the secondary cell; and stop, according to the indication information for stopping channel detection of the secondary cell, channel detection of the secondary cell, where the indication information for stopping channel detection of the secondary cell is sent by the NodeB1 303 or the NodeB2 302.

The RNC 301 is further configured to, after the NodeB2 302 sends the indication information for deactivating the secondary cell, transfer data that has not been successfully sent in the secondary cell, to the primary cell for continued sending.

The NodeB2 302 is further configured to discard temporarily stored data and reconfigure a MAC-hs entity or a MAC-ehs entity.

Preferably, the RNC 301 is further configured to, when sending, to the NodeB1 303, the indication information for falling back a detection format, notify the NodeB1 303 of a time at which fallback of a detection format takes effect.

The NodeB2 302 is further configured to, when sending the indication information for stopping channel detection of the secondary cell to the UE 304, notify the UE 304 of a time at which stopping channel detection of the secondary cell takes effect.

The time, of which the NodeB1 303 is notified by the RNC 301, at which fallback of a detection format takes effect is the same as the time, of which the UE 304 is notified by the NodeB2 302, at which stopping channel detection of the secondary cell takes effect.

Alternatively, the time at which the NodeB1 303 falls back a detection format takes effect may also be preset, and the time at which the UE 304 stops channel detection of the secondary cell takes effect may also be preset, so that the time at which the NodeB1 303 falls back detection a format fallback takes effect is the same as the time at which the UE 304 stops channel detection of the secondary cell takes effect.

According to the system provided in this embodiment, for an MF-Tx technical scenario where serving cells of a UE are on different NodeBs, a control procedure for deactivating a secondary cell is triggered by an RNC; after the secondary cell is deactivated, the RNC transfers data that has not been successfully sent in the secondary cell, to a primary cell for continued sending; in addition, NodeB2 discards temporarily stored data and reconfigures a MAC-hs entity or a MAC-ehs entity, the UE falls back to a single-cell HS-DPCCH feedback, and NodeB1 falls back to channel coding format detection of a single-cell HS-DPCCH. This effectively solves a problem that a network-side HS-DPCCH and a UE-side HS-DPCCH are inconsistent in a deactivation process and a problem of invalid data transmission over an Iub interface after deactivation of the secondary cell; therefore, network-side scheduling performance is effectively improved, and power of the UE is saved.

Another example provides a cell control method. With respect to a system architecture shown in FIG. 1, this example describes in detail, by using an example that deactivation of a secondary cell is controlled by a primary cell, the method provided in this example. This example does not set a limitation to a trigger condition under which deactivation of the secondary cell is controlled by the primary cell. In practical applications, when detecting that a small amount of UE downlink data needs to be scheduled, NodeB1 may determine that the secondary cell is deactivated. Referring to FIG. 4, details about a procedure of the method provided in this example are as follows:
401: NodeB1 sends indication information for deactivating the secondary cell to an RNC.

The indication information sent by NodeB1 may be sent in a manner of being carried in signaling or a data frame between NodeB1 and the RNC, or sent in another manner. This example does not set a limitation to this.

402. The RNC sends the indication information for deactivating the secondary cell to NodeB2, and NodeB2 stops, according to the indication information for deactivating the secondary cell, sending data in a downlink HS-SCCH and a downlink HS-PDSCH of cell 2.

For this step, the indication information for deactivating the secondary cell, which is sent by the RNC, may be sent in a manner of being carried in signaling or a data frame between the RNC and NodeB2, or sent in another manner. This example does not set a limitation to this. In a user plane, the RNC may have sent data on NodeB2; therefore, after the RNC deactivates the secondary cell, the RNC needs to transfer data that has not been successfully sent in the secondary cell, to the primary cell for continued sending; in addition, NodeB2 needs to discard temporarily stored data and reconfigure a MAC-hs entity or a MAC-ehs entity.

403: NodeB1 sends, over an air interface of the primary cell, indication information for stopping channel detection of the secondary cell to the UE, and the UE stops, according to the indication information for stopping channel detection of the secondary cell, detection of the HS-SCCH channel and the HS-PDSCH channel of the secondary cell.

For this step, the indication information for stopping channel detection of the secondary cell may be sent in a manner of being carried on the HS-SCCH channel or one or more other downlink physical channels, or in another manner. This example does not set a specific limitation to this. Stopping, by the UE according to the indication information for stopping channel detection of the secondary cell, the detection of the HS-SCCH channel and the HS-PDSCH channel of the secondary cell means that: The UE falls back to a single-cell HSDPA receiving mode; in addition, the HS-DPCCH channel also falls back to a single-cell HS-DPCCH feedback format.

Alternatively, in addition to this step of sending, by NodeB1 over the air interface of the primary cell, the indication information for stopping channel detection of the secondary cell to the UE, NodeB2 may also send, over an air interface of the secondary cell, the indication information for stopping channel detection of the secondary cell to the UE, so that the UE stops, according to the indication information for stopping channel detection of the secondary cell, detection of the HS-SCCH channel and the HS-PDSCH channel of the secondary cell.

In addition, it should be noted that in addition to being performed after the step 402, the step 403 may also be performed after the step 401 and before the step 402. This example does not set a limitation to an order for performing the step 403 and the step 402.

404: NodeB1 falls back uplink HS-DPCCH feedback of the UE to channel coding format detection of a single-cell HS-DPCCH.

For this step, regardless of whether the step is that NodeB1 sends, over the air interface of the primary cell, the indication information for stopping channel detection of the secondary cell to the UE, or that NodeB2 sends, over an air interface of the secondary cell, indication information for stopping channel detection of the secondary cell to the UE, after the UE stops, according to the indication information for stopping channel detection of the secondary cell, detection of the HS-SCCH channel and the HS-PDSCH channel of the secondary cell, NodeB1 falls back the uplink HS-DPCCH feedback of the UE to the channel coding format detection of the single-cell HS-DPCCH.

Further, for a manner in which NodeB2 sends, over the air interface of the secondary cell, the indication information for stopping channel detection of the secondary cell to the UE, HS-DPCCH fallback may take effect at different time points for NodeB1 and the UE. Therefore, for the purpose of keeping NodeB1 and the UE synchronous during the HS-DPCCH fallback, the method provided in this example supports that in the step 401, when NodeB1 sends the indication information for deactivating the secondary cell to the RNC, the NodeB1 may also send the RNC a time at which fallback of a detection format takes effect, so that the RNC notifies NodeB2 of the time at which fallback of a detection format takes effect; in addition, when NodeB2 sends, over the air interface of the secondary cell, the indication information for stopping channel detection of the secondary cell to the UE, NodeB2 may also notify the UE of a time at which stopping channel detection of the secondary cell takes effect; the time, of which the UE is notified by NodeB2, at which stopping channel detection of the secondary cell takes effect is the same as the time at which NodeB1 falls back a detection format takes effect, so that NodeB1 and the UE perform the fallback at the same time, and this ensures consistency between the time on a network side and the time on a UE side. In addition, a time may be preset, so that NodeB1 and the UE perform synchronous HS-DPCCH fallback at the preset time.

According to the method provided in this example, for an MF-Tx technical scenario in which serving cells of a UE are in different NodeBs, a control procedure for deactivating a secondary cell is triggered by a primary cell; after the secondary cell is deactivated, an RNC transfers data that has not been successfully sent in the secondary cell, to the primary cell for continued sending; in addition, NodeB2 discards temporarily stored data and reconfigures a MAC-hs entity or a MAC-ehs entity, the UE falls back to a single-cell HS-DPCCH feedback, and NodeB1 falls back to channel coding format for detection of a single-cell HS-DPCCH. This effectively solves a problem that a network-side HS-DPCCH and a UE-side HS-DPCCH are inconsistent in a deactivation process and a problem of invalid data transmission over an Iub interface after deactivation of the secondary cell; therefore, network-side scheduling performance is effectively improved, and power of the UE is saved.

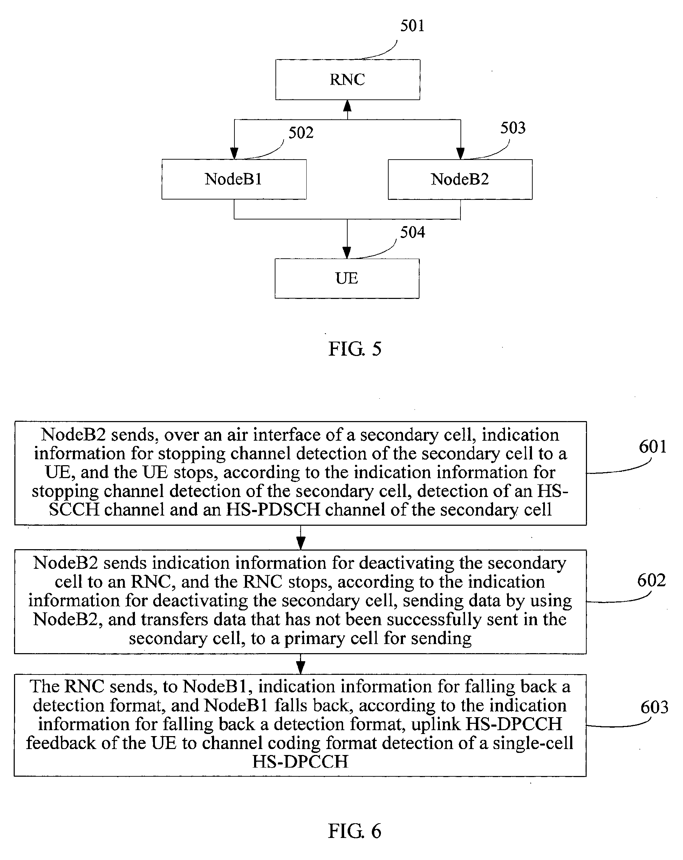

Another example provides a cell control system. The system is configured to execute the cell control method provided in the foregoing example and belongs to the same idea as the cell control method provided in the foregoing example. For a detailed implementation process thereof, refer to the foregoing example. Referring to FIG. 5, the system includes an RNC 501, a NodeB1 502, a NodeB2 503, and a UE 504.

The NodeB1 502 is configured to send indication information for deactivating a secondary cell to the RNC 501, so that the RNC 501 sends the indication information for deactivating the secondary cell to the NodeB2 503; send indication information for stopping channel detection of the secondary cell to the UE 504, so that the UE 504 stops, according to the indication information for stopping channel detection of the secondary cell, channel detection of the secondary cell; and fall back to channel coding format for detection of a single-cell HS-DPCCH.

The RNC 501 is configured to receive the indication information for deactivating the secondary cell, where the indication information for deactivating the secondary cell is sent by the NodeB1 502; and send the indication information for deactivating the secondary cell to the NodeB2 503.

The NodeB2 503 is configured to receive the indication information for deactivating the secondary cell, where the indication information for deactivating the secondary cell is sent by the RNC 501; stop, according to the indication information for deactivating the secondary cell, sending data of the secondary cell; and send indication information for stopping detection of the secondary cell to the UE 504.

The UE 504 is configured to receive the indication information for stopping detection of the secondary cell; and stop, according to the indication information for stopping detection of the secondary cell, channel detection of the secondary cell, where the indication information for stopping channel detection of the secondary cell is sent by the NodeB1 502 or the NodeB2 503.

The RNC 501 is further configured to, after the NodeB2 503 sends the indication information for deactivating the secondary cell, transfer data that has not been successfully sent in the secondary cell, to the primary cell for continued sending.

The NodeB2 503 is further configured to discard temporarily stored data and reconfigure a MAC-hs entity or a MAC-ehs entity.

Preferably, the NodeB1 502 is further configured to, when sending the indication information for deactivating the secondary cell to the RNC 501, send the RNC 501 a time at which the NodeB1 502 falls back a detection format, so that when sending the indication information for deactivating the secondary cell to the NodeB2 503, the RNC 501 notifies the NodeB2 503 of the time at which fallback of a detection format takes effect.

The NodeB2 503 is further configured to, when sending the indication information for stopping channel detection of the secondary cell to the user equipment UE 504, notify the UE 504 of a time at which stopping channel detection of the secondary cell takes effect.

The time, of which the UE 504 is notified by the NodeB2 503, at which stopping channel detection of the secondary cell takes effect is the same as the time at which the NodeB1 502 falls back a detection format takes effect.

Alternatively, the time at which the NodeB1 502 falls back a detection format takes effect may also be preset, and the time at which the UE 504 stops channel detection of the secondary cell takes effect may also be preset, so that the time at which the NodeB1 502 falls back a detection format fallback takes effect is the same as the time at which the UE 504 stops channel detection of the secondary cell takes effect.

According to the system provided in this example, for an MF-Tx technical scenario in which serving cells of a UE are on different NodeBs, a control procedure for deactivating a secondary cell is triggered by a primary cell; after the secondary cell is deactivated, an RNC transfers data that has not been successfully sent in the secondary cell, to the primary cell for continued sending; in addition, NodeB2 discards temporarily stored data and reconfigures a MAC-hs entity or a MAC-ehs entity, the UE falls back to a single-cell HS-DPCCH feedback, and NodeB1 falls back to channel coding format detection of a single-cell HS-DPCCH. This effectively solves a problem that a network-side HS-DPCCH and a UE-side HS-DPCCH are inconsistent in a deactivation process and a problem of invalid data transmission over an Iub interface after deactivation of the secondary cell; therefore, network-side scheduling performance is effectively improved, and power of the UE is saved.

Another example provides a cell control method. With respect to a system architecture shown in FIG 1, this example describes in detail, by using an example that deactivation of a secondary cell is controlled by the secondary cell, the method provided in this example. This example does not set a limitation to a trigger condition under which deactivation of the secondary cell is controlled by the secondary cell. In practical applications, when detecting that a small amount of UE downlink data needs to be scheduled, NodeB2 may determine that the secondary cell is deactivated. Referring to FIG. 6, details about a procedure of the method provided in this example are as follows:
601: NodeB2 sends, over an air interface of the secondary cell, indication information for stopping channel detection of the secondary cell to the UE, and the UE stops, according to the indication information for stopping channel detection of the secondary cell, detection of an HS-SCCH channel and an HS-PDSCH channel of the secondary cell.

For this step, the indication information for stopping channel detection of the secondary cell may be sent in a manner of being carried on the HS-SCCH channel or one or more other downlink physical channels, or in another manner. This example does not set a specific limitation to this. Stopping, by the UE according to the indication information for stopping channel detection of the secondary cell, the detection of the HS-SCCH channel and the HS-PDSCH channel of the secondary cell means that: The UE falls back to a single-cell HSDPA receiving mode; in addition, the HS-DPCCH channel also falls back to a single-cell HS-DPCCH feedback format.

602. NodeB2 sends indication information for deactivating the secondary cell to an RNC; and the RNC stops, according to the indication information for deactivating the secondary cell, sending data by using NodeB2, and transfers data that has not been successfully sent in the secondary cell, to the primary cell for sending.

The indication information sent by the NodeB2 for deactivating the secondary cell may be sent in a manner of being carried in signaling or a data frame between NodeB2 and the RNC, or sent in another manner. This example does not set a limitation to this.

Alternatively, in addition to a notification scheme in which the NodeB2 notifies, in a manner of sending the indication information for deactivating the secondary cell, the RNC that the secondary cell is deactivated, this example further provides another notification scheme: After receiving the indication information, sent by NodeB2 over the air interface of the secondary cell, for stopping channel detection of the secondary cell, the UE triggers reporting of a state report at an RLC (Radio Link Control, radio link control) layer, where the state report carries the indication information for deactivating the secondary cell, so that after receiving the indication information for deactivating the secondary cell, the RNC stops sending data by using NodeB2 and transfers data that has not been successfully sent in the secondary cell, to the primary cell for sending.

In addition, it should be noted that in addition to being performed after the step 601, the step 602 may also be performed before the step 601. This example does not set a limitation to an order for performing the step 601 and the step 602.

603: The RNC sends, to NodeB1, indication information for falling back a detection format, and NodeB1 falls back uplink HS-DPCCH feedback of the UE, according to the indication information for falling back a detection format, to channel coding format detection of a single-cell HS-DPCCH.

The indication information for falling back a detection format, which is sent by the RNC, may be sent in a manner of being carried in signaling or a data frame between the RNC and NodeB1, or in another manner. This example does not set a specific limitation to this.

Alternatively, in addition to a manner in which the RNC sends NodeB1 the indication information for falling back a detection format to trigger NodeB1 to fall back a detection format, another trigger manner is also provided in the method provided in this example; that is, the UE indicates, on an uplink channel, that NodeB1 falls back to the single-cell HS-DPCCH detection. For this trigger manner, HS-DPCCH switching may take effect at different time points for NodeB 1 and the UE. Therefore, preferably, for the purpose of keeping the time when the HS-DPCCH switching takes effect for NodeB1 and the UE synchronous, the method provided in this example supports that in the step 601, when NodeB2 sends, over the air interface of the secondary cell, the indication information for stopping channel detection of the secondary cell to the UE, NodeB2 may also notify the UE of a time at which stopping channel detection of the secondary cell takes effect; in addition, when the RNC sends the indication information for falling back a detection format to NodeB1 in this step, the RNC may also notify NodeB1 of a time at which fallback of a detection format takes effect; or when the UE indicates, on the uplink channel, that NodeB1 falls back to the single-cell HS-DPCCH detection, the UE may also notify NodeB1 of the time at which fallback of a detection format takes effect; and the time at which NodeB1 falls back a detection format is the same as the time at which the UE stops channel detection of the secondary cell takes effect, so that NodeB 1 and the UE perform the fallback at the same time, and this ensures consistency between the time on a network side and the time on a UE side. In addition, a time may be preset, so that NodeB1 and the UE perform synchronous HS-DPCCH fallback at the preset time.

According to the method provided in this example, for an MF-Tx technical scenario in which serving cells of a UE are on different NodeBs, a control procedure for deactivating a secondary cell is triggered by the secondary cell; after the secondary cell is deactivated, an RNC transfers data that has not been successfully sent in the secondary cell, to the primary cell for continued sending; in addition, NodeB2 discards temporarily stored data and reconfigures a MAC-hs entity or a MAC-ehs entity, the UE falls back to a single-cell HS-DPCCH feedback, and NodeB1 falls back to channel coding format detection of a single-cell HS-DPCCH. This effectively solves a problem that a network-side HS-DPCCH and a UE-side HS-DPCCH are inconsistent in a deactivation process and a problem of invalid data transmission over an Iub interface after deactivation of the secondary cell; therefore, network-side scheduling performance is effectively improved, and power of the UE is saved.

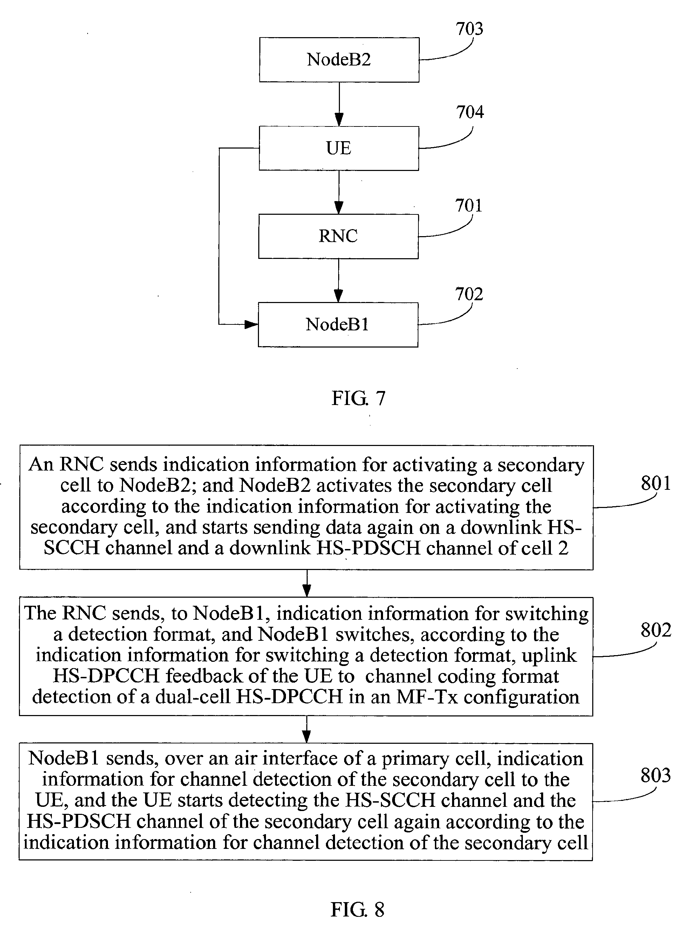

Another example provides a cell control system. The system is configured to execute the cell control method provided in the foregoing example and belongs to the same idea as the cell control method provided in the foregoing example. For a detailed implementation process thereof, refer to the foregoing example. Referring to FIG. 7, the system includes an RNC 701, a NodeB1 702, a NodeB2 703, and a UE 704.

The NodeB2 703 is configured to send indication information for stopping channel detection of a secondary cell to the UE 704, so that the UE 704 stops, according to the indication information for stopping channel detection of the secondary cell, channel detection of the secondary cell, triggers reporting of a state report at a radio link layer, and sends, on an uplink channel to the NodeB NodeB1 702 in which a primary cell resides, indication information for falling back a detection format, where the state report carries indication information for deactivating the secondary cell, and the indication information for deactivating the secondary cell is reported to the radio network controller RNC 701.

The RNC 701 is configured to send, to the NodeB NodeB1 702 in which the primary cell resides and according to the indication information for deactivating the secondary cell, indication information for falling back a detection format, where the indication information for deactivating the secondary cell is carried in the state report or sent by the NodeB2 703.

NodeB1 702 is configured to fall back, according to the indication information for falling back a detection format, to channel coding format detection of a single-cell HS-DPCCH, where the indication information for falling back a detection format is sent by the RNC 701 or is sent by the UE 704 on the uplink channel.

The UE 704 is configured to stop, according to the indication information for stopping detection of the secondary cell, channel detection of the secondary cell, where the indication information for stopping channel detection of the secondary cell is sent by the NodeB2 703; trigger reporting of the state report at the radio link layer; and send, on the uplink channel to the NodeB NodeB1 702 in which the primary cell resides, the indication information for falling back a detection format.

The RNC 701 is further configured to, after receiving the indication information for activating the secondary cell, transfer data that has not been successfully sent in the secondary cell, to the primary cell for continued sending.

The NodeB2 703 is further configured to discard temporarily stored data and reconfigure a MAC-hs entity or a MAC-ehs entity.

Preferably, the NodeB2 703 is further configured to, when sending the indication information for stopping channel detection of the secondary cell to the user equipment UE 704, notify the UE 704 of a time at which stopping channel detection of the secondary cell takes effect.

The RNC 701 is further configured to, when sending, to the NodeB1 702 in which the primary cell resides, the indication information for falling back a detection format, notify the NodeB1 702 of a time at which fallback of a detection format takes effect.

The time, of which the NodeB1 702 is notified by the RNC 701, at which fallback of a detection format takes effect is the same as the time, of which the UE 704 is notified by the NodeB2 703, at which stopping channel detection of the secondary cell takes effect.

Alternatively, the time at which the NodeB1 702 falls back a detection format takes effect may also be preset, and the time at which the UE 704 stops channel detection of the secondary cell takes effect may also be preset, so that the time at which the NodeB1 702 falls back a detection format fallback takes effect is the same as the time at which the UE 704 stops channel detection of the secondary cell takes effect.

According to the system provided in this example, for an MF-Tx technical scenario in which serving cells of a UE are in different NodeBs, a control procedure for deactivating a secondary cell is triggered by the secondary cell; after the secondary cell is deactivated, an RNC transfers data that has not been successfully sent in the secondary cell, to the primary cell for continued sending; in addition, NodeB2 discards temporarily stored data and reconfigures a MAC-hs entity or a MAC-ehs entity, the UE falls back to a single-cell HS-DPCCH feedback, and NodeB1 falls back to channel coding format detection of a single-cell HS-DPCCH. This effectively solves a problem that a network-side HS-DPCCH and a UE-side HS-DPCCH are inconsistent in a deactivation process and a problem of invalid data transmission over an Iub interface after deactivation of the secondary cell; therefore, network-side scheduling performance is effectively improved, and power of the UE is saved.

Another example provides a cell control method. With respect to a system architecture shown in FIG 1, this example describes in detail, by using an example that deactivation of a secondary cell is controlled by an RNC, the method provided in this example. This example does not set a limitation to a trigger condition under which activation of the secondary cell is controlled by the RNC. In practical applications, the RNC may activate the secondary cell according to factors, such as amount of traffic to be scheduled, and load of the secondary cell. For example, when there is a large amount of traffic to be scheduled, a primary cell has a poorer capability in data scheduling and needs to occupy an extra scheduling resource of the secondary cell; in this case, the RNC may determine that the secondary cell is activated. Referring to FIG. 8, details about a procedure of the method provided of this example are as follows:
801. The RNC sends indication information for activating the secondary cell to NodeB2; and NodeB2 activates the secondary cell according to the indication information for activating the secondary cell, and starts sending data again on a downlink HS-SCCH channel and a downlink HS-PDSCH channel of cell 2.

For this step, the indication information for activating the secondary cell, which is sent by the RNC, may be sent in a manner of being carried in signaling or a data frame between the RNC and NodeB2, or sent in another manner. This example does not set a specific limitation to this.

802: The RNC sends, to NodeB1, indication information for switching a detection format, and NodeB1 switches, according to the indication information for switching a detection format, uplink HS-DPCCH feedback of the UE to channel coding format detection of a dual-cell HS-DPCCH in an MF-Tx configuration.

The indication information for switching a detection format, which is sent by the RNC, may be sent in a manner of being carried in signaling or a data frame between the RNC and NodeB1, or in another manner. This example does not set a specific limitation to this.

In addition, it should be noted that in addition to being performed after the step 801, the step 802 may also be performed before the step 801. This example does not set a limitation to an order for performing the step 801 and the step 802.

803: NodeB1 sends, over an air interface of the primary cell, indication information for channel detection of the secondary cell to the UE, and the UE starts detecting the HS-SCCH channel and the HS-PDSCH channel of the secondary cell again according to the indication information for channel detection of the secondary cell.

For this step, the indication information for channel detection of the secondary cell may be sent in a manner of being carried on the HS-SCCH channel or one or more other downlink physical channels, or in another manner. This example does not set a specific limitation to this. Detecting, by the UE, the HS-SCCH channel and the HS-PDSCH channel of the secondary cell according to the indication information for channel detection of the secondary cell means that: The UE switches to a dual-cell HSDPA receiving mode in the MF-Tx configuration; in addition, the HS-DPCCH channel also falls back to a dual-cell HS-DPCCH feedback format.

Alternatively, in addition to this step of sending, by NodeB1 over the air interface of the primary cell, the indication information for channel detection of the secondary cell to the UE, NodeB2 may also send, over an air interface of the secondary cell, the indication information for channel detection of the secondary cell to the UE, so that the UE detects the HS-SCCH channel and the HS-PDSCH channel of the secondary cell according to the indication information for channel detection of the secondary cell. However, in this case, HS-DPCCH switching may take effect at different time points for NodeB1 and the UE. Therefore, preferably, for the purpose of keeping the time when the HS-DPCCH switching takes effect for NodeB1 and the UE synchronous, the method provided in this example supports that in the step 802, when the RNC sends the indication information for switching a detection format to NodeB1, the RNC may also notify the NodeB1 of a time at which switching takes effect; in addition, when NodeB2 sends, over the air interface of the secondary cell, the indication information for channel detection of the secondary cell to the UE, NodeB2 may also notify the UE of a time at which channel detection of the secondary cell takes effect, so that NodeB1 and the UE perform fallback at the same time; and this ensures consistency between the time on a network side and the time on a UE side. In addition, a time may be preset, so that NodeB1 and the UE perform synchronous HS-DPCCH fallback at the preset time.

According to the method provided in this example, for an MF-Tx technical scenario in which serving cells of a UE are in different NodeBs, a control procedure for activating a secondary cell is triggered by an RNC; after the secondary cell is activated, NodeB2 starts sending data again on a downlink HS-SCCH channel and a downlink HS-PDSCH channel of cell 2; the UE switches to a dual-cell HSDPA receiving mode in an MF-Tx configuration; and NodeB1 switches to channel coding format detection of a dual-cell HS-DPCCH in the MF-Tx configuration. This effectively solves a problem that a network-side HS-DPCCH and a UE-side HS-DPCCH are inconsistent in an activation process; therefore, network-side scheduling performance is effectively improved, and power of the UE is saved.

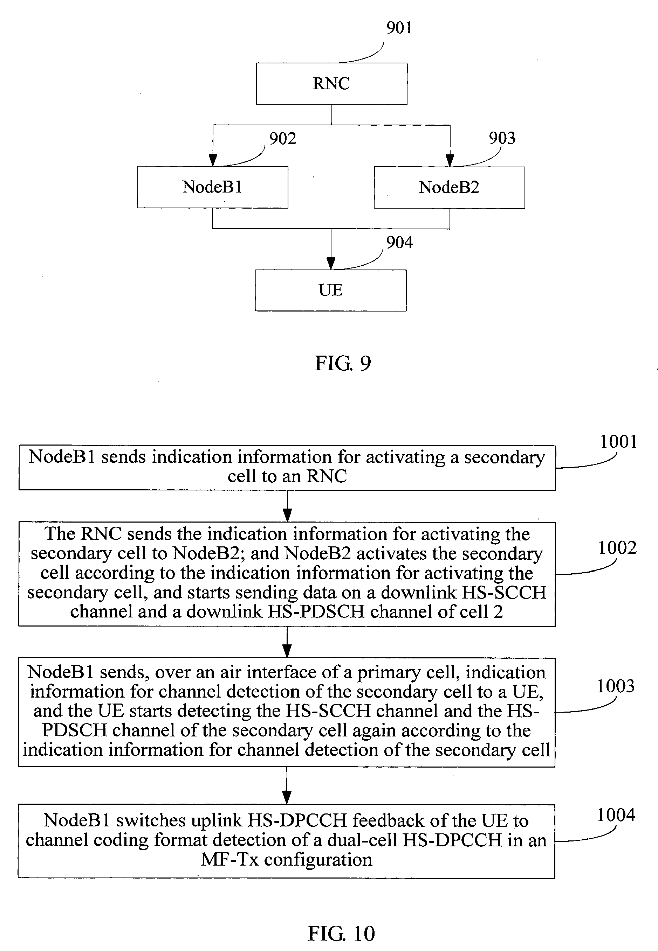

Another example provides a cell control system. The system is configured to execute the cell control method provided in the foregoing example and belongs to the same idea as the cell control method provided in the foregoing example. For a detailed implementation process, refer to the foregoing example. Referring to FIG. 9, the system includes an RNC 901, a NodeB1 902, a NodeB2 903, and a UE 904.

The RNC 901 is configured to send indication information for activating a secondary cell to the NodeB2 903, so that the NodeB2 903 sends data on a downlink channel of the secondary cell according to the indication information for activating the secondary cell; and send, to the NodeB1 902, indication information for switching a detection format, so that the NodeB1 902 switches, according to the indication information for switching a detection format, to channel coding format detection of a dual-cell HS-DPCCH.

The NodeB2 903 is configured to receive the indication information for activating the secondary cell, where the indication information for activating the secondary cell is sent by the RNC 901; send data on the downlink channel of the secondary cell according to the indication information for activating the secondary cell; and send indication information for channel detection of the secondary cell to the UE 904, so that the UE 904 detects a channel of the secondary cell according to the indication information for channel detection of the secondary cell.

The NodeB1 902 is configured to receive the indication information for switching a detection format, where the indication information for switching a detection format is sent by the RNC 901; switch, according to the indication information for switching a detection format, to the channel coding format detection of the dual-cell HS-DPCCH; and send indication information for channel detection of the secondary cell to the UE 904, so that the UE 904 detects a channel of the secondary cell according to the indication information for channel detection of the secondary cell.

The UE 904 is configured to receive the indication information for channel detection of the secondary cell, where the indication information for channel detection of the secondary cell is sent by the NodeB1 902 or the NodeB2 903; and detect a channel of the secondary cell according to the indication information for channel detection of the secondary cell.

Preferably, the RNC 901 is further configured to, when sending, to the NodeB NodeB1 902 in which a primary cell resides, the indication information for switching a detection format, notify the NodeB1 902 of a at which switching a detection format takes effect.

The NodeB2 903 is further configured to, when sending the indication information for channel detection of the secondary cell to the user equipment UE 904, notify the UE 904 of a time at which channel detection of the secondary cell takes effect.

The time, of which the NodeB1 902 is notified by the RNC 901, at which switching a detection format takes effect takes effect is the same as the time, of which the UE 904 is notified by the NodeB2 903, at which channel detection of the secondary cell takes effect.

Alternatively, the time at which the NodeB1 902 switches a detection format takes effect may also be preset, and the time at which the UE 904 detects a channel of the secondary cell takes effect may also be preset, so that the time at which the NodeB1 902 switches a detection format takes effect is the same as the time at which the UE 904 detects a channel of the secondary cell takes effect.

According to the system provided in this example, for an MF-Tx technical scenario in which serving cells of a UE are in different NodeBs, a control procedure for activating a secondary cell is triggered by an RNC; after the secondary cell is activated, NodeB2 starts sending data again on a downlink HS-SCCH channel and a downlink HS-PDSCH channel of cell 2; the UE switches to a dual-cell HSDPA receiving mode in an MF-Tx configuration; and NodeB1 switches to channel coding format detection of a dual-cell HS-DPCCH in the MF-Tx configuration. This effectively solves a problem that a network-side HS-DPCCH and a UE-side HS-DPCCH are inconsistent in an activation process; therefore, network-side scheduling performance is effectively improved, and power of the UE is saved.

Another example provides a cell control method. With respect to a system architecture shown in FIG. 1, this example describes in detail, by using an example that deactivation of a secondary cell is controlled by a primary cell, the method provided in this example. This example does not set a limitation to a trigger condition under which deactivation of the secondary cell is controlled by the primary cell. In practical applications, when detecting that a small amount of UE downlink data needs to be scheduled, NodeB2 may determine that the secondary cell is activated. Referring to FIG. 10, details about a procedure of the method provided in this example are as follows:
1001: NodeB1 sends indication information for activating the secondary cell to an RNC.

The indication information for activating the secondary cell, which is sent by NodeB1, may be sent in a manner of being carried in signaling or a data frame between NodeB1 and the RNC, or sent in another manner. This example does not set a limitation to this.

1002. The RNC sends the indication information for activating the secondary cell to NodeB2; and NodeB2 activates the secondary cell according to the indication information for activating the secondary cell, and starts to send data on a downlink HS-SCCH channel and a downlink HS-PDSCH channel of cell 2.

For this step, the indication information for activating the secondary cell, which is sent by the RNC, may be sent in a manner of being carried in signaling or a data frame between the RNC and NodeB2, or sent in another manner. This example does not set a specific limitation to this.

1003: NodeB1 sends, over an air interface of the primary cell, indication information for channel detection of the secondary cell to the UE; and the UE starts detecting the HS-SCCH channel and the HS-PDSCH channel of the secondary cell again according to the indication information for channel detection of the secondary cell.

For this step, the indication information for channel detection of the secondary cell may be sent in a manner of being carried on the HS-SCCH channel or one or more other downlink physical channels, or in another manner. This example does not set a specific limitation to this. Detecting, by the UE, the HS-SCCH channel and the HS-PDSCH channel of the secondary cell according to the indication information for channel detection of the secondary cell means that: The UE switches to a dual-cell HSDPA receiving mode in an MF-Tx configuration; in addition, the HS-DPCCH channel also falls back to a dual-cell HS-DPCCH feedback format.

Alternatively, in addition to this step of sending, by NodeB1 over the air interface of the primary cell, the indication information for channel detection of the secondary cell to the UE, NodeB2 may also send, over an air interface of the secondary cell, the indication information for channel detection of the secondary cell to the UE, so that the UE detects the HS-SCCH channel and the HS-PDSCH channel of the secondary cell according to the indication information for channel detection of the secondary cell.

In addition, it should be noted that in addition to being performed after the step 1002, the step 1003 may also be performed after the step 1001 and in the step 1002. This example does not set a limitation to an order for performing the step 1003 and the step 1002.

1004: NodeB1 switches uplink HS-DPCCH feedback of the UE to channel coding format detection of a dual-cell HS-DPCCH in the MF-Tx configuration.

For this step, regardless of whether the step is that NodeB1 sends, over the air interface of the primary cell, the indication information for channel detection of the secondary cell to the UE, or that NodeB2 sends, over an air interface of the secondary cell, indication information for channel detection of the secondary cell to the UE, after the UE detects the HS-SCCH channel and the HS-PDSCH channel of the secondary cell according to the received indication information for channel detection of the secondary cell, NodeB1 switches the uplink HS-DPCCH feedback of the UE to the channel coding format detection of the dual-cell HS-DPCCH in the MF-Tx configuration.

Further, for a manner of sending, by NodeB2 over the air interface of the secondary cell, the indication information for channel detection of the secondary cell to the UE, HS-DPCCH switching may take effect at different time points for NodeB1 and the UE. Therefore, for the purpose of keeping the time when the HS-DPCCH switching takes effect for NodeB1 and the UE synchronous, the method provided in this example supports that: When NodeB2 sends, over the air interface of the secondary cell, the indication information for channel detection of the secondary cell to the UE, NodeB2 may also notify the UE of a time at which detection of a channel of the secondary cell takes effect, so that NodeB1 and the UE perform switching at the same time; and this ensures consistency between the time on a network side and the time on a UE side. In addition, a time may be preset, so that NodeB1 and the UE perform synchronous HS-DPCCH switching at the preset time.

According to the method provided in this example, for an MF-Tx technical scenario in which serving cells of a UE are in different NodeBs, a control procedure for activating a secondary cell is triggered by a primary cell; after the secondary cell is activated, NodeB2 starts sending data again on a downlink HS-SCCH channel and a downlink HS-PDSCH channel of cell 2; the UE switches to a dual-cell HSDPA receiving mode in an MF-Tx configuration; and NodeB1 switches to channel coding format detection of a dual-cell HS-DPCCH in the MF-Tx configuration. This effectively solves a problem that a network-side HS-DPCCH and a UE-side HS-DPCCH are inconsistent in an activation process; therefore, network-side scheduling performance is effectively improved, and power of the UE is saved.

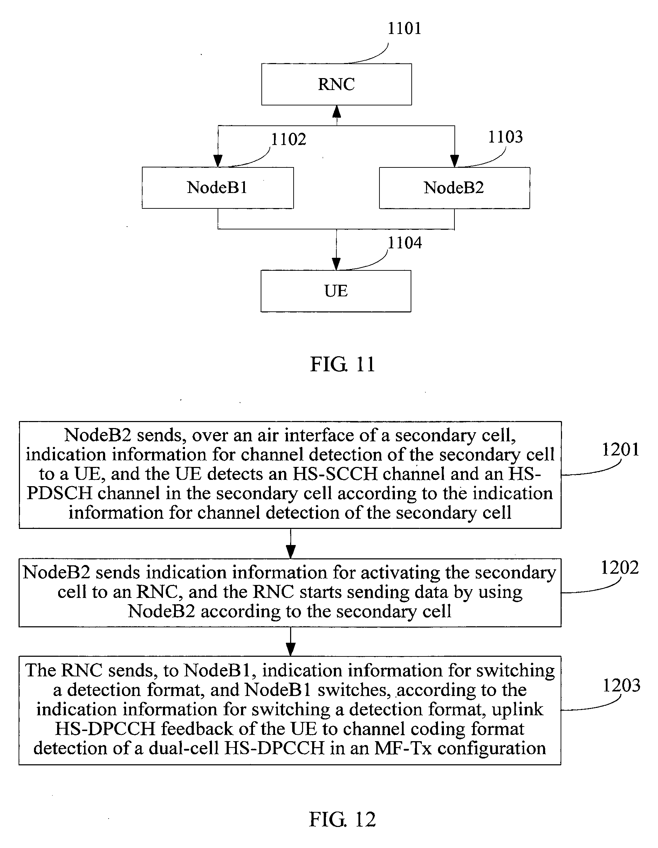

Another example provides a cell control system. The system is configured to execute the cell control method provided in the foregoing example and belongs to the same idea as the cell control method provided in the foregoing example. For a detailed implementation process, refer to the foregoing example. Referring to FIG. 11, the system includes an RNC 1101, a NodeB1 1102, a NodeB2 1103, and a UE 1104.

The NodeB1 1102 is configured to send indication information for activating a secondary cell to the RNC 1101, so that the RNC 1101 sends the indication information for activating the secondary cell to the NodeB NodeB2 1103; send indication information for detection of the secondary cell to the UE 1104, so that the UE 1104 detects a channel of the secondary cell according to the indication information for detection of the secondary cell; and switch to channel coding format detection of a dual-cell HS-DPCCH.

The RNC 1101 is configured to, after receiving the indication information for deactivating the secondary cell, send the indication information for deactivating the secondary cell to the NodeB2 1103, where the indication information for deactivating the secondary cell is sent by the NodeB1 1102.

The NodeB2 1103 is configured to send data of the secondary cell after receiving the indication information for activating the secondary cell, where the indication information for activating the secondary cell is sent by the RNC 1101; and send indication information for detection of the secondary cell to the UE 1104.

The UE 1104 is configured to detect a channel of the secondary cell according to the indication information for detection of the secondary cell, where the indication information for detection of the secondary cell is sent by the NodeB 1102 or the NodeB2 1103.

Preferably, the NodeB1 1102 is further configured to, when sending the indication information for activating the secondary cell to the radio network controller RNC 1101, send a time at which the NodeB1 1102 switches a detection format takes effect to the RNC 1101, so that when sending the indication information for activating the secondary cell to the NodeB2 1103, the RNC 1101 notifies the NodeB2 1103 of the time at which switching a detection format takes effect.

The NodeB2 1103 is further configured to, when sending the indication information for channel detection of the secondary cell to the UE 1104, notify the UE 1104 of a time at which channel detection of the secondary cell takes effect.

The time, of which the UE 1104 is notified by the NodeB2 1103, at which channel detection of the secondary cell takes effect is the same as the time at which the NodeB1 1102 switches a detection format takes effect.

Alternatively, the time at which the NodeB 1 1102 switches a detection format takes effect may also be preset, and the time at which the UE 1104 detects a channel of the secondary cell takes effect may also be preset, so that the time at which the NodeB1 1102 switches a detection format takes effect is the same as the time at which the UE 1104 detects a channel of the secondary cell takes effect.

According to the system provided in this example, for an MF-Tx technical scenario in which serving cells of a UE are in different NodeBs, a control procedure for activating a secondary cell is triggered by a primary cell; after the secondary cell is activated, NodeB2 starts sending data again on a downlink HS-SCCH channel and a downlink HS-PDSCH channel of cell 2; the UE switches to a dual-cell HSDPA receiving mode in an MF-Tx configuration; and NodeB1 switches to channel coding format detection of a dual-cell HS-DPCCH in the MF-Tx configuration. This effectively solves a problem that a network-side HS-DPCCH and a UE-side HS-DPCCH are inconsistent in an activation process; therefore, network-side scheduling performance is effectively improved, and power of the UE is saved.

Another example provides a cell control method. With respect to a system architecture shown in FIG. 1, this example describes in detail, by using an example that deactivation of a secondary cell is controlled by the secondary cell, the method provided in this example. This example does not set a limitation to a trigger condition under which deactivation of the secondary cell is controlled by the secondary cell. In practical applications, when detecting that a large amount of UE downlink data needs to be scheduled, NodeB2 may determine that the secondary cell is activated. Referring to FIG. 12, details about a procedure of the method provided in this example are as follows:
1201: NodeB2 sends, over an air interface of the secondary cell, indication information for channel detection of the secondary cell to the UE, and the UE detects an HS-SCCH channel and an HS-PDSCH channel of the secondary cell according to the indication information for channel detection of the secondary cell.

For this step, the indication information for channel detection of the secondary cell may be sent in a manner of being carried on the HS-SCCH channel or one or more other downlink physical channels, or in another manner. This example does not set a specific limitation to this. Detecting, by the UE, the HS-SCCH channel and the HS-PDSCH channel of the secondary cell according to the indication information for channel detection of the secondary cell means that: The UE switches to a dual-cell HSDPA receiving mode in an MF-Tx configuration; in addition, the HS-DPCCH channel also falls back to a dual-cell HS-DPCCH feedback format.

1202: NodeB2 sends indication information for activating the secondary cell to an RNC; and the RNC starts to send data by using NodeB2 according to the indication information for activating the secondary cell.

The indication information for activating the secondary cell, which is sent by NodeB2, may be sent in a manner of being carried in signaling or a data frame between NodeB2 and the RNC, or sent in another manner. This example does not set a limitation to this.

Alternatively, in addition to a manner of sending, by NodeB2, the indication information for activating the secondary cell to the RNC to notify the RNC that the secondary cell has been activated, this example further provides another notification scheme, that is, after receiving the indication information for channel detection of the secondary cell, which is sent by NodeB2 over the air interface of the secondary cell, the UE triggers reporting of a state report at an RLC layer, where the state report carries the indication information for activating the secondary cell, so that after receiving the indication information for activating the secondary cell, the RNC starts to send data by using NodeB2.

In addition, it should be noted that in addition to being performed after the step 1201, the step 1202 may also be performed before the step 1201. This example does not set a limitation to an order for performing the step 1201 and the step 1202.

1203: The RNC sends, to NodeB1, indication information for switching a detection format; and NodeB1 switches, according to the indication information for switching a detection format, uplink HS-DPCCH feedback of the UE to channel coding format detection of a dual-cell HS-DPCCH in an MF-Tx configuration.

The indication information for switching a detection format, which is sent by the RNC, may be sent in a manner of being carried in signaling or a data frame between the RNC and NodeB1, or in another manner. This example does not set a specific limitation to this.

Alternatively, in addition to a manner in which the RNC sends NodeB1 the indication information for switching a detection format to trigger NodeB1 to switch a detection format, another trigger manner is also provided in the method provided in this example; that is, the UE indicates, on an uplink channel, that NodeB1 switches to the dual-cell HS-DPCCH detection. For this trigger manner, HS-DPCCH switching may take effect at different time points for NodeB1 and the UE. Therefore, preferably, for the purpose of keeping the time when the HS-DPCCH switching takes effect for NodeB 1 and the UE synchronous, the method provided in this example supports that in the step 801, when NodeB2 sends, over the air interface of the secondary cell, the indication information for channel detection of the secondary cell to the UE, NodeB2 may also notify the UE of a time at which channel detection of the secondary cell takes effect; in addition, when the RNC sends the indication information for switching a detection format, or when the UE indicates, on the uplink channel, that NodeB1 switches to the dual-cell HS-DPCCH detection, the RNC or the UE notifies NodeB1 of a time at which switching takes effect; and this ensures consistency between the time on a network side and the time on a UE side.

According to the method provided in this example, for an MF-Tx technical scenario in which serving cells of a UE are in different NodeBs, a control procedure for activating a secondary cell is triggered by the secondary cell; after the secondary cell is activated, NodeB2 starts sending data again on a downlink HS-SCCH channel and a downlink HS-PDSCH channel of cell 2; the UE switches to a dual-cell HSDPA receiving mode in an MF=Tx configuration; and NodeB1 switches to channel coding format detection of a dual-cell HS-DPCCH in the MF-Tx configuration. This effectively solves a problem that a network-side HS-DPCCH and a UE-side HS-DPCCH are inconsistent in an activation process; therefore, network-side scheduling performance is effectively improved, and power of the UE is saved.

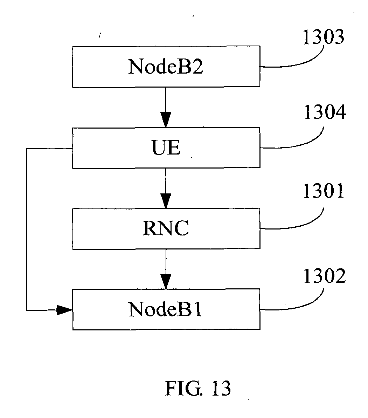

Another example provides a cell control system. The system is configured to execute the cell control method provided in the foregoing example and belongs to the same idea as the cell control method provided in the foregoing example. For a detailed implementation process, refer to the foregoing example. Referring to FIG. 13, the system includes an RNC 1301, a NodeB1 1302, a NodeB2 1303, and a UE 1304.

The NodeB2 1303 is configured to send indication information for channel detection of a secondary cell to the UE 1304, so that the UE 1304 detects a channel of the secondary cell according to the indication information for channel detection of the secondary cell, triggers reporting of a state report at a radio link layer, and sends, on an uplink channel, indication information for switching a detection format to the NodeB NodeB1 1302 in which a primary cell resides, where the state report carries indication information for activating the secondary cell, and the indication information for deactivating the secondary cell is reported to the radio network controller RNC 1301.

The RNC 1301 is configured to send, according to the indication information for activating the secondary cell, the indication information for switching a detection format to the NodeB NodeB1 1302 in which the primary cell resides, where the indication information for activating the secondary cell is carried in the state report or is sent by the NodeB2 1303.

The NodeB1 1302 is configured to switch, according to the indication information for switching a detection format, to channel coding format detection of a dual-cell HS-DPCCH, where the indication information for switching a detection format is sent by the RNC 1301 or sent by the UE 1304 on the uplink channel.

The UE 1304 is configured to receive the indication information for channel detection of the secondary cell, where the indication information for channel detection of the secondary cell is sent by the NodeB2 1303; detect a channel of the secondary cell according to the indication information for detection of the secondary cell; trigger reporting of the state report at the radio link layer; and send, on the uplink channel, the indication information for switching a detection format to the NodeB NodeB1 1302 in which the primary cell resides.

Preferably, the NodeB2 1303 is further configured to, when sending the indication information for channel detection of the secondary cell to the UE 1304, notify the UE 1304 of a time at which channel detection of the secondary cell takes effect.

The RNC 1301 is further configured to, when sending the indication information for switching a detection format to the NodeB1 1302, notify the NodeB1 1302 of a time at which switching a detection format takes effect.

The time, of which the NodeB1 1302 is notified by the RNC 1301, at which switching a detection format takes effect is the same as the time, of which the UE 1304 is notified by the NodeB2 1303, at which channel detection of the secondary cell takes effect.

Alternatively, the time at which the NodeB1 1302 switches a detection format takes effect may also be preset, and the time for the UE 1304 detects a channel of the secondary cell takes effect may also be preset, so that the time at which the NodeB1 1302 switches a detection format takes effect is the same as the time at which the UE 1304 detects a channel of the secondary cell takes effect.

According to the system provided in this example, for an MF-Tx technical scenario in which serving cells of a UE are in different NodeBs, a control procedure for activating a secondary cell is triggered by the secondary cell; after the secondary cell is activated, NodeB2 starts sending data again on a downlink HS-SCCH channel and a downlink HS-PDSCH channel of cell 2; the UE switches to a dual-cell HSDPA receiving mode in an MF-Tx configuration; and NodeB1 switches to channel coding format detection of a dual-cell HS-DPCCH in the MF-Tx configuration. This effectively solves a problem that a network-side HS-DPCCH and a UE-side HS-DPCCH are inconsistent in an activation process; therefore, network-side scheduling performance is effectively improved, and power of the UE is saved.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. A part of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

When the integrated units are implemented in a form of a software functional unit and sold or used as an independent product, the integrated units may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any mediums that can store program code, such as a USB flash drive, a removable hard disk, a read-only memory (Read-Only Memory, ROM), a random access memory (Random Access Memory, RAM), a magnetic disk, or an optical disc.

## Claims

1. A cell control method, comprising:
sending (201), by a radio network controller RNC, indication information for deactivating a secondary cell to a second NodeB in which the secondary cell resides, so that the second NodeB stops, according to the indication information for deactivating the secondary cell, sending data on a downlink channel of the secondary cell;
sending (202), by the RNC to a first NodeB in which a primary cell resides, indication information for falling back a detection format, so that the first NodeB falls back, according to the indication information for falling back a detection format, to a single-cell uplink high-speed dedicated physical control channel HS-DPCCH channel coding format for detection, wherein the primary and secondary cell are provided in the context of High Speed Downlink Packages Access, HSDPA, multi-flow transmission for a same user equipment UE; and
sending (203), by the second NodeB, indication information for stopping channel detection of the secondary cell to the user equipment UE, so that the UE stops, according to the indication information for stopping channel detection of the secondary cell, channel detection of the secondary cell, further comprising:
notifying, by the RNC, the first NodeB of a time at which fallback of a detection format takes effect; and
notifying, by the second NodeB, the UE of a time at which stopping channel detection of the secondary cell takes effect, wherein:
the time, of which the first NodeB is notified by the RNC, at which fallback of a detection format takes effect is the same as the time, of which the UE is notified by the second NodeB, at which stopping channel detection of the secondary cell takes effect.

2. The method according to claim 1, wherein the indication information for deactivating the secondary cell, which is sent by the radio network controller RNC to the second NodeB in which the secondary cell resides, is carried in signaling or a data frame between the RNC and the second NodeB;
the indication information for falling back a detection format, which is sent by the RNC to the first NodeB in which the primary cell resides, is carried in signaling or a data frame between the RNC and the first NodeB; and
the indication information for stopping channel detection of the secondary cell, which is sent by the second NodeB or the first NodeB to the user equipment UE, is carried on a high-speed shared control channel HS-SCCH or, one or moreother downlink physical channels.

3. The method according to claim 1, wherein after the sending, by a radio network controller RNC, indication information for deactivating a secondary cell to a second NodeB in which the secondary cell resides, the method further comprises:
transferring, by the RNC, data that has not been successfully sent in the secondary cell, to the primary cell for continued sending; and
discarding, by the second NodeB, temporarily stored data, and reconfiguring a MAC-hs entity or a MAC-ehs entity.

4. A cell control system, comprising: a radio network controller RNC (301), a second NodeB (302) in which a secondary cell resides, a first NodeB (303) in which a primary cell resides, and a user equipment UE (304), wherein the primary and secondary cell are provided in the context of High Speed Downlink Packages Access, HSDPA, multi-flow transmission for the same user equipment UE (304), wherein:
the RNC (301) is configured to: send indication information for deactivating the secondary cell to the second NodeB (302), so that the second NodeB (302) stops, according to the indication information for deactivating the secondary cell, sending data on a downlink channel of the secondary cell; send, to the first NodeB (303), indication information for falling back a detection format, so that the first NodeB (303) falls back, according to the indication information for falling back a detection format, to channel coding format detection of a single-cell uplink high-speed dedicated physical control channel HS-DPCCH;
the second NodeB (302) is configured to: receive the indication information for deactivating the secondary cell, wherein the indication information for deactivating the secondary cell is sent by the RNC (301); stop, according to the indication information for deactivating the secondary cell, sending data on the downlink channel of the secondary cell; and send indication information for stopping channel detection of the secondary cell to the UE (304), so that the UE (304) stops, according to the indication information for stopping channel detection of the secondary cell, channel detection of the secondary cell;
the first NodeB (303) is configured to: receive the indication information for falling back a detection format, wherein the indication information for falling back a detection format is sent by the RNC (301); fall back, according to the indication information for falling back a detection format, to the channel coding format detection of the single-cell HS-DPCCH; and send indication information for stopping channel detection of the secondary cell to the UE (304), so that the UE (304) stops, according to the indication information for stopping channel detection of the secondary cell, channel detection of the secondary cell; and
the UE (304) is configured to: receive the indication information for stopping channel detection of the secondary cell, wherein the indication information for stopping channel detection of the secondary cell is sent by the first NodeB (303) or the second NodeB (302); and stop, according to the indication information for stopping channel detection of the secondary cell, channel detection of the secondary cell, wherein the RNC (301) is further configured to notify the first NodeB (303) of a time at which fallback of a detection format takes effect;
the second NodeB (302) is further configured to: notify the UE (304) of a time at which stopping channel detection of the secondary cell takes effect; and
the time, of which the first NodeB (303) is notified by the RNC (301), at which fallback of a detection format takes effect is the same as the time, of which the UE is notified by the second NodeB (302), at which stopping channel detection of the secondary cell takes effect.

5. The system according to claim 4, wherein the radio network controller RNC (301) is further configured to, after sending the indication information for deactivating the secondary cell to the second NodeB (302), transfer data that has not been successfully sent in the secondary cell, to the primary cell for continued sending; and
the second NodeB (302) is further configured to discard temporarily stored data and reconfigure a MAC-hs entity or a MAC-ehs entity.

## Patentansprüche

1. Zellensteuerungsverfahren, das Folgendes umfasst:
Senden (201) durch eine Funknetzsteuereinheit, RNC, von Angabeinformationen zum Deaktivieren einer sekundären Zelle zu einem zweiten NodeB, in dem sich die sekundäre Zelle befindet, so dass der zweite NodeB gemäß den Angabeinformationen zum Deaktivieren der sekundären Zelle das Senden von Daten auf einem Abwärtsstreckenkanal der sekundären Zelle anhält;
Senden (202) durch die RNC zu einem ersten NodeB, in dem sich eine primäre Zelle befindet, von Angabeinformationen zum Zurückfallen auf ein Detektionsformat, so dass der erste NodeB gemäß den Angabeinformationen zum Zurückfallen auf ein Detektionsformat auf ein Codierungsformat für einen dedizierten physikalischen Einzelzellen-Hochgeschwindigkeitsaufwärtsstreckensteuerkanal, Einzelzellen-HS-DPCCH, zur Detektion zurückfällt, wobei die primäre und die sekundäre Zelle in dem Kontext von Hochgeschwindigkeitsabwärtsstreckenpaketzugang-Mehrfachstromübertragung, HSDPA-Mehrfachstromübertragung, für dasselbe Anwendergerät, UE, vorgesehen sind; und
Senden (203) durch den zweiten NodeB von Angabeinformationen zum Anhalten von Kanaldetektion der sekundären Zelle zu dem Anwendergerät, UE, so dass das UE gemäß den Angabeinformationen zum Anhalten von Kanaldetektion der sekundären Zelle die Kanaldetektion der sekundären Zelle anhält, das ferner Folgendes umfasst:
Benachrichtigen durch die RNC des ersten NodeB über eine Zeit, zu der das Zurückfallen auf ein Detektionsformat wirksam wird; und
Benachrichtigen durch den zweiten NodeB des UE über eine Zeit, zu der das Anhalten der Kanaldetektion der sekundären Zelle wirksam wird, wobei:
die Zeit, über die der erste NodeB durch die RNC benachrichtigt wird, zu der das Zurückfallen auf ein Detektionsformat wirksam wird, dieselbe ist wie die Zeit, über die das UE durch den zweiten NodeB benachrichtigt wird, zu der das Anhalten der Kanaldetektion der sekundären Zelle wirksam wird.

2. Verfahren nach Anspruch 1, wobei die Angabeinformationen zum Deaktivieren der sekundären Zelle, die durch die Funknetzsteuereinheit, RNC, zu dem zweiten NodeB, in dem sich die sekundäre Zelle befindet, gesendet werden, in Signalisierung oder einem Datenrahmen zwischen der RNC und dem sekundären NodeB geführt sind;
die Angabeinformationen zum Zurückfallen auf ein Detektionsformat, die durch die RNC zu dem ersten NodeB, in dem sich die primäre Zelle befindet, gesendet werden, in Signalisierung oder einem Datenrahmen zwischen der RNC und dem ersten NodeB geführt sind; und
die Angabeinformationen zum Anhalten von Kanaldetektion der sekundären Zelle, die durch den zweiten NodeB oder den ersten NodeB zu dem Anwendergerät, UE, gesendet werden, auf einem gemeinsam verwendeten Hochgeschwindigkeitssteuerkanal, HS-SCCH, oder einem oder mehreren anderen physikalischen Abwärtsstreckenkanälen geführt sind.

3. Verfahren nach Anspruch 1, wobei das Verfahren nach dem Senden durch eine Funknetzsteuereinheit, RNC, von Angabeinformationen zum Deaktivieren einer sekundären Zelle zu einem zweiten NodeB, in dem sich die sekundäre Zelle befindet, ferner Folgendes umfasst:
Übertragen durch die RNC von Daten, die nicht erfolgreich in der sekundären Zelle gesendet worden sind, zu der primären Zelle zum fortgesetzten Senden; und
Verwerfen durch den zweiten NodeB von temporär gespeicherten Daten und Neukonfigurieren einer MAC-hs-Entität oder einer MAC-ehs-Entität.

4. Zellensteuerungssystem, das Folgendes umfasst: eine Funknetzsteuereinheit, RNC, (301), einen zweiten NodeB (302), in dem sich eine sekundäre Zelle befindet, einen ersten NodeB (303), in dem sich eine primäre Zelle befindet, und ein Anwendergerät, UE, (304), wobei die primäre und die sekundäre Zelle in dem Kontext von Hochgeschwindigkeitsabwärtsstreckenpaketzugang-Mehrfachstromübertragung, HSDPA-Mehrfachstromübertragung, für dasselbe Anwendergerät, UE, (304) vorgesehen sind, wobei:
die RNC (301) konfiguriert ist: Angabeinformationen zum Deaktivieren der sekundären Zelle des zweiten NodeB (302) zu senden, so dass der zweite NodeB (302) gemäß den Angabeinformationen zum Deaktivieren der sekundären Zelle das Senden von Daten auf einem Abwärtsstreckenkanal der sekundären Zelle anhält; zu dem ersten NodeB (303) Angabeinformationen zum Zurückfallen auf ein Detektionsformat zu senden, so dass der erste NodeB (303) gemäß den Angabeinformationen zum Zurückfallen auf ein Detektionsformat auf Kanalcodierungsformatdetektion eines dedizierten physikalischen Einzelzellen-Hochgeschwindigkeitsaufwärtsstreckensteuerkanals, Einzelzellen-HS-DPCCH, zurückfällt;
der zweite NodeB (302) konfiguriert ist: die Angabeinformationen zum Deaktivieren der sekundären Zelle zu empfangen, wobei die Angabeinformationen zum Deaktivieren der sekundären Zelle durch die RNC (301) gesendet werden; gemäß den Angabeinformationen zum Deaktivieren der sekundären Zelle das Senden von Daten auf dem Abwärtsstreckenkanal der sekundären Zelle anzuhalten; und Angabeinformationen zum Anhalten von Kanaldetektion der sekundären Zelle zu dem UE (304) zu senden, so dass das UE (304) gemäß den Angabeinformationen zum Anhalten von Kanaldetektion der sekundären Zelle die Kanaldetektion der sekundären Zelle anhält;
der erste NodeB (303) konfiguriert ist: die Angabeinformationen zum Zurückfallen auf ein Detektionsformat zu empfangen, wobei die Angabeinformationen zum Zurückfallen auf ein Detektionsformat durch die RNC (301) gesendet werden; gemäß den Angabeinformationen zum Zurückfallen auf ein Detektionsformat auf die Kanalcodierungsformatdetektion des Einzelzellen-HS-DPCCH zurückzufallen; und Angabeinformationen zum Anhalten von Kanaldetektion der sekundären Zelle zu dem UE (304) zu senden, so dass das UE (304) gemäß den Angabeinformationen zum Anhalten von Kanaldetektion der sekundären Zelle die Kanaldetektion der sekundären Zelle anhält; und
das UE (304) konfiguriert ist: die Angabeinformationen zum Anhalten von Kanaldetektion der sekundären Zelle zu empfangen, wobei die Angabeinformationen zum Anhalten von Kanaldetektion der sekundären Zelle durch den ersten NodeB (303) oder den zweiten NodeB (302) gesendet werden; und gemäß den Angabeinformationen zum Anhalten von Kanaldetektion der sekundären Zelle die Kanaldetektion der sekundären Zelle anzuhalten, wobei die RNC (301) ferner konfiguriert ist, den ersten NodeB (303) über eine Zeit, zu der das Zurückfallen auf ein Detektionsformat wirksam wird, zu benachrichtigen;
der zweite NodeB (302) ferner konfiguriert ist: das UE (304) über eine Zeit, zu der das Anhalten von Kanaldetektion der sekundären Zelle wirksam wird, zu benachrichtigen; und
die Zeit, über die der erste NodeB (303) durch die RNC (301) benachrichtigt wird, zu der das Zurückfallen auf ein Detektionsformat wirksam wird, dieselbe ist wie die Zeit, über die das UE durch den zweiten NodeB (302) benachrichtigt wird, zu der das Anhalten von Kanaldetektion der sekundären Zelle wirksam wird.

5. System nach Anspruch 4, wobei die Funknetzsteuereinheit, RNC, (301) ferner konfiguriert ist, nach dem Senden der Angabeinformationen zum Deaktivieren der sekundären Zelle zu dem zweiten NodeB (302) Daten, die nicht erfolgreich in der sekundären Zelle gesendet worden sind, zu der primären Zelle zum fortgesetzten Senden zu übertragen; und
der zweite NodeB (302) ferner konfiguriert ist, temporär gespeicherte Daten zu verwerfen und eine MAC-hs-Entität oder eine MAC-ehs-Entität neu zu konfigurieren.

## Revendications

1. Procédé de commande de cellule, comprenant :
l'envoi (201), par un contrôleur de réseau radio RNC, d'une information d'indication de désactivation d'une cellule secondaire à un second noeud B dans lequel réside la cellule secondaire, de telle sorte que le second noeud B arrête, conformément à l'information d'indication de désactivation de la cellule secondaire, d'envoyer des données sur un canal de liaison descendante de la cellule secondaire ;
l'envoi (202) par le contrôleur RNC à un premier noeud B dans lequel réside une cellule principale, d'une information d'indication de retour à un format de détection, de telle sorte que le premier noeud B revienne, conformément à l'information d'indication de retour à un format de détection, à un format de codage de canal pour canal de commande physique dédié à haut débit HS-DPCCH de liaison montante de cellule unique pour la détection, dans lequel la cellule principale et la cellule secondaire sont fournies dans le contexte d'une transmission à flux multiples selon l'accès de paquets de liaison descendante à haut débit, HSDPA, pour un même équipement utilisateur UE ; et
l'envoi (203), par le second noeud B, d'une information d'indication d'arrêt de détection de canal de la cellule secondaire à l'équipement utilisateur UE, de telle sorte que l'équipement UE arrête, conformément à l'information d'indication d'arrêt de détection de canal de la cellule secondaire, la détection de canal de la cellule secondaire, comprenant en outre :
la notification, par le contrôleur RNC, au premier noeud B d'une heure à laquelle le retour à un format de détection prend effet ; et
la notification, par le second noeud B, à l'équipement UE d'une heure à laquelle l'arrêt de la détection de canal de la cellule secondaire prend effet, dans lequel :
l'heure, notifiée au premier noeud B par le contrôleur RNC, à laquelle le retour au format de détection prend effet est la même que l'heure, notifiée à l'équipement UE par le second noeud B, à laquelle l'arrêt de la détection de canal de la cellule secondaire prend effet.

2. Procédé selon la revendication 1, dans lequel l'information d'indication de désactivation de la cellule secondaire, qui est envoyée par le contrôleur de réseau radio RNC au second noeud B dans lequel réside la cellule secondaire, est acheminée dans une signalisation ou une trame de données entre le contrôleur RNC et le second noeud B ;
l'information d'indication de retour à un format de détection, qui est envoyée par le contrôleur de réseau radio RNC au premier noeud B dans lequel réside la cellule principale, est acheminée dans une signalisation ou une trame de données entre le contrôleur RNC et le premier noeud B ; et
l'information d'indication d'arrêt de détection de canal de la cellule secondaire, qui est envoyée par le second noeud B ou le premier noeud B à l'équipement utilisateur UE, est acheminée sur un canal de commande partagé à haut débit HS-SCCH ou sur un ou plusieurs autres canaux physiques de liaison descendante.

3. Procédé selon la revendication 1, comprenant en outre, après l'envoi par un contrôleur de réseau radio RNC, d'une information d'indication de désactivation d'une cellule secondaire à un second noeud B dans lequel réside la cellule secondaire le transfert, par le contrôleur RNC, de données qui n'ont pas été envoyées correctement dans la cellule secondaire, à la cellule principale pour la continuation de leur envoi ; et
le rejet, par le second noeud B, de données mémorisées temporairement, et la reconfiguration d'une entité MAC-hs ou d'une entité MAC-ehs.

4. Système de commande de cellule, comprenant un contrôleur de réseau radio RNC (301), un second noeud B (302) dans lequel réside une cellule secondaire, un premier noeud B (303) dans lequel réside une cellule principale, et un équipement utilisateur UE (304), dans lequel la cellule principale et la cellule secondaire sont fournies dans le contexte d'une transmission à flux multiples selon l'accès de paquets de liaison descendante à haut débit, HSDPA, pour un même équipement utilisateur UE (304), dans lequel :
le contrôleur RNC (301) est configuré pour envoyer une information d'indication de désactivation de la cellule secondaire au second noeud B (302), de telle sorte que le second noeud B (302) arrête, conformément à l'information d'indication de désactivation de la cellule secondaire, d'envoyer des données sur un canal de liaison descendante de la cellule secondaire ; envoyer au premier noeud B (303), une information d'indication de retour à un format de détection, de telle sorte que le premier noeud B (303) revienne, conformément à l'information d'indication de retour à un format de détection, à un format de codage de canal pour canal de commande physique dédié à haut débit HS-DPCCH de liaison montante de cellule unique ;
le second noeud B (302) est configuré pour recevoir l'information d'indication de désactivation de la cellule secondaire, l'information de désactivation de la cellule secondaire étant envoyée par le contrôleur RNC (301) ; arrêter, conformément à l'information d'indication de désactivation de la cellule secondaire, d'envoyer des données sur le canal de liaison descendante de la cellule secondaire ; et envoyer une information d'indication d'arrêt de détection de canal de la cellule secondaire à l'équipement utilisateur (304), de telle sorte que l'équipement UE (304) arrête, conformément à l'information d'indication d'arrêt de détection de canal de la cellule secondaire, la détection de canal de la cellule secondaire ;
le premier noeud B (303) est configuré pour recevoir l'information d'indication de retour à un format de détection, l'information d'indication de retour à un format de détection étant envoyée par le contrôleur RNC (301) ; revenir, conformément à l'information d'indication de retour à un format de détection, à la détection de format de codage de canal du canal HS-DPCCH de cellule unique ; et envoyer une information d'indication d'arrêt de détection de canal de la cellule secondaire à l'équipement UE (304), de telle sorte que l'équipement UE (304) arrête, conformément à l'information d'indication d'arrêt de détection de canal de la cellule secondaire, la détection de canal de la cellule secondaire ; et
l'équipement UE (304) est configuré pour recevoir l'information d'indication d'arrêt de détection de canal de la cellule secondaire, l'information d'indication d'arrêt de détection de canal de la cellule secondaire étant envoyée par le premier noeud B (303) ou le second noeud B (302) ; et arrêter, conformément à l'information d'indication d'arrêt de la détection de canal de la cellule secondaire, la détection de canal de la cellule secondaire, dans lequel le contrôleur RNC (301) est configuré en outre pour notifier au premier noeud B (303) une heure à laquelle le retour à un format de détection prend effet ;
le second noeud B (302) est configuré en outre pour notifier à l'équipement UE (304) une heure à laquelle l'arrêt de la détection de canal de la cellule secondaire prend effet ; et
l'heure, notifiée au premier noeud B (303) par le contrôleur RNC (301), à laquelle le retour au format de détection prend effet est la même que l'heure, notifiée à l'équipement UE par le second noeud B (302), à laquelle l'arrêt de la détection de canal de la cellule secondaire prend effet.

5. Système selon la revendication 4, dans lequel le contrôleur de réseau radio RNC (301) est configuré en outre pour, après l'envoi de l'information d'indication de désactivation de la cellule secondaire au second noeud B (302), transférer des données qui n'ont pas été envoyées correctement dans la cellule secondaire, à la cellule principale pour la continuation de leur envoi ; et
le second noeud B (302) est configuré en outre pour rejeter des données mémorisées temporairement et reconfigurer une entité MAC-hs ou une entité MAC-ehs.
